# EUROPÄISCHE PATENTSCHRIFT

(11) **EP 3 949 720 B1**
(45) Veröffentlichungstag und Bekanntmachung des Hinweises auf die Patenterteilung: **04.06.2025**
(21) Anmeldenummer: 21186840.1
(22) Anmeldetag: 21.07.2021
(51) Int. Cl.: A01F 15/14

(54) **KNOTERHAKEN FÜR EINEN GARNKNOTER EINER BALLENPRESSE**
KNOTTER HOOK FOR A YARN KNOTTER OF A BALER
BEC DU NOUEUR POUR UN NOUEUR DE FIL D'UNE PRESSE À BALLES

(30) Priorität: 03.08.2020 DE 102020120447
(43) Veröffentlichungstag der Anmeldung: 09.02.2022
(73) Patentinhaber: Maschinenfabrik Bernard Krone GmbH & Co. KG, 48480 Spelle (DE)
(72) Erfinder: van Roje, Lukas, 49832 Freren (DE)

(56) Entgegenhaltungen:
- WO-A1-2015/014616
- DE-C- 919 023
- US-A- 3 301 583
- US-A- 306 232

## Beschreibung

Die vorliegende Erfindung betrifft einen Knoterhaken für einen Garnknoter zum Herstellen eines Schlaufenknotens, mit wenigstens einem feststehenden Klemmflügel und einem schwenkbeweglich gelagerten Klemmflügel, die eine Erstreckungskomponente in eine selbe erste Raumrichtung aufweisen, wobei der schwenkbewegliche Klemmflügel eine in Richtung zum feststehenden Klemmflügel hin erhabene Anformung aufweist, und reversibel von einem ungeöffneten in einen geöffneten Zustand verschwenkbar ist, so dass ein freies Ende des schwenkbeweglichen Klemmflügels im geöffneten Zustand weiter vom feststehenden Klemmflügel beabstandet ist als im ungeöffneten Zustand. Die vorliegende Erfindung betrifft weiterhin einen Knoterhaken mit zwei feststehenden Klemmflügeln. Die vorliegende Erfindung betrifft weiterhin einen Garnknoter mit dem Knoterhaken sowie eine Ballenpresse mit dem Garnknoter.

Aus der EP 2 837 281 A1 ist ein Garnknoter für eine Ballenpresse bekannt, der zum Verknoten zweier Bindemittelstränge vorgesehen ist, die zum Binden eines Erntegutballens genutzt werden, damit dieser nicht auseinanderfällt. Der Knoterhaken ist zum Herstellen eines Knotens vorgesehen, bei dem die Enden der Bindemittelstränge vollständig durch eine Bindemittelschlaufe gezogen sind. Er weist einen feststehenden Knoterbock auf, der mit einer schwenkbeweglich gelagerten Knoterzunge zusammenwirkt, um die freien Enden der Bindemittelstränge während des Verknotens der Bindemittelstränge in einem Spalt zwischen dem Knoterbock und der Knoterzunge festzuhalten. Am freien Ende der schwenkbeweglichen Knoterzunge befindet sich ein Widerhaken, der in eine Ausnehmung des Knoterbocks eingreift.

Zum Verknoten der Bindemittelstränge werden diese beim Drehen des Knoterhakens zunächst um den Knoterbock geschlungen, so dass sich eine Bindemittelschlaufe um den Knoterbock bildet. Das Ende der Bindemittelstränge wird dann zwischen den Knoterbock und die Knoterzunge eingelegt und dort verklemmt. Beim anschließenden Abstreifen der Schlaufe hält der Widerhaken die Bindemittelstränge fest, so dass sie durch die Bindemittelschlaufe gezogen werden. Nachdem die Bindemittelschlaufe vom Knoterbock abgeglitten ist, ist die Knoterzunge frei, so dass sie bei Zug auf den Knoten nach oben verschwenken kann und die Bindemittelstränge freigibt. Dadurch lösen sich die Bindemittelstränge und der so fertiggestellte Knoten wird endseitig etwa in einer Erstreckungsrichtung des Knoterbocks und der Knoterzunge vom Knoterhaken gezogen.

Bei einem Schlaufenknoten, bei dem die Enden der Bindemittelstränge nicht vollständig durch die Bindemittelschlaufe gezogen sind, muss die Knoterzunge sehr weit nach oben verschwenkt werden, damit trotz des Widerhakens an der Knoterzunge gewährleistet ist, dass der Schlaufenknoten sicher vom Knoterhaken abgestreift wird.

Die Druckschrift US 3,301,583 A offenbart einen Knoter mit einem an einer Knüpferwelle angeordneten Knüpferschnabel, dessen Knoterzunge um eine Schwenkachse verschwenkbar gelagert ist, die quer zur Knoterwelle angeordnet ist, wobei die Schwenkachse in einer Langlochführung angeordnet ist. Dadurch ist die Knoterzunge in Abhängigkeit von einer Dicke der Garne im Langloch verschiebbar.

Die Druckschrift DE 919 023 C offenbart einen Knüpferschnabel für Strohpressen und Mähbinder, bei dem eine Unterlippe an einer dem Fadenhalter zugekehrten Seite mit einer Wulst versehen ist, die nach einem vorderen Ende der Unterlippe gegenüber einer abgeschrägten Wulst auf einer Nadelseite der Unterlippe erhöht und vorstehend ausgebildet ist.

Die Druckschrift WO 2015/014616 A1 offenbart ein Knotersystem mit einem Knoterhaken zur Bildung eines Knotens mit einem ersten Antriebsmittel, das dazu eingerichtet ist, den Knoterhaken mindestens um eine erste und um eine zweite volle Umdrehung zu drehen, und mit einem Schwenkarm, der während eines vollen Betätigungszyklus mindestens zwei Mal von einer hinteren zu einer vorderen Position und zurück bewegt wird, um einen ersten und einen darauf folgenden zweiten Knoten zu bilden.

Ein weiterer Knoterhaken ist aus der US306232A bekannt.

Aufgabe der Erfindung ist es, einen Knoterhaken für einen Garnknoter zu schaffen, der ein Abstreifen eines Knotens, insbesondere eines Schlaufenknotens, vom Knoterhaken zuverlässig gewährleistet, sowie einen Garnknoter mit einem solchen Knoterhaken und eine Ballenpresse mit einem solchen Garnknoter.

Die Aufgabe wird gelöst mit einem Knoterhaken mit den Merkmalen des unabhängigen Patentanspruchs 1, mit einem Garnknoter mit den Merkmalen des unabhängigen Patentanspruchs 12 sowie mit einer Ballenpresse mit den Merkmalen des unabhängigen Patentanspruchs 13. Vorteilhafte Ausführungsformen sind den abhängigen Ansprüchen entnehmbar.

Dafür wird ein Knoterhaken für einen Garnknoter geschaffen. Der Knoterhaken ist zum Herstellen eines Schlaufenknotens vorgesehen. Er weist wenigstens einen feststehenden Klemmflügel auf. Zudem ist an dem Knoterhaken ein weiterer Klemmflügel schwenkbeweglich gelagert. Die Klemmflügel weisen eine Erstreckungskomponente in eine selbe erste Raumrichtung auf. Dabei kann der schwenkbewegliche Klemmflügel zum feststehenden Klemmflügel in eine zweite Raumrichtung, die sich quer zur ersten Raumrichtung erstreckt, wenigstens bereichsweise und wenigstens geringfügig höhenversetzt angeordnet sein.

Am schwenkbeweglichen Klemmflügel ist zudem eine Anformung vorgesehen. Die Anformung ist in Richtung zum feststehenden Klemmflügel hin erhaben. Sie erstreckt sich daher gegen die zweite Raumrichtung. Weiterhin weist sie bevorzugt eine etwa hakenförmige Kontur auf.

Der schwenkbewegliche Klemmflügel ist reversibel von einem ungeöffneten Zustand, insbesondere um ein Schwenkflügellager in eine Flügelschwenkrichtung, in einen geöffneten Zustand verschwenkbar, so dass ein freies Ende des schwenkbeweglichen Klemmflügels im geöffneten Zustand weiter vom feststehenden Klemmflügel beabstandet ist als im ungeöffneten Zustand. Im geöffneten Zustand sind Bindemittelstränge zwischen den schwenkbeweglichen Klemmflügel und die feststehenden Klemmflügel einlegbar. Im ungeöffneten Zustand sind miteinander zu verknotende Bindemittelstränge zwischen dem wenigstens einen feststehenden und dem schwenkbeweglichen Klemmflügel sicher verklemmbar.

Unterhalb des schwenkbeweglichen Klemmflügels ist ein Freiraum gebildet, der sich im ungeöffneten Zustand gegen die erste Raumrichtung noch über die Anformung hinaus erstreckt.

Die Aufgabe wird erfindungsgemäß dadurch gelöst, dass der Knoterhaken neben dem wenigstens einen feststehenden Klemmflügel einen weiteren feststehenden Klemmflügel aufweist, wobei zwischen den feststehenden Klemmflügeln ein Spalt ausgebildet ist. Der schwenkbewegliche Klemmflügel erstreckt sich, insbesondere in der zweiten Raumrichtung, im ungeöffneten Zustand im und/oder oberhalb des Spaltes zwischen den feststehenden Klemmflügeln. Dabei erstreckt sich der Spalt im ungeöffneten Zustand gegen die erste Raumrichtung über die Anformung hinaus. Die feststehenden Klemmflügel erstrecken sich von einem Rumpf des Knoterhakens ausgehend zu einem freien Ende hin.

Der Knoterhaken zeichnet sich dadurch aus, dass die beiden feststehenden Klemmflügel zumindest endseitig voneinander beabstandet sind, so dass der Spalt zwischen ihnen ausgebildet ist.

Zum Verschwenken des schwenkbeweglichen Klemmflügels ist an seinem seinem freien Ende gegenüberliegenden Ende eine Steuerrolle vorgesehen.

Auch in dieser Ausgestaltung ist eine Ausführungsform des Knoterhakens bereitgestellt, mit der ein einfaches Abstreifen des fertiggestellten Knotens durch den Spalt nach unten möglich ist.

Dabei ist es bevorzugt, dass sich der Spalt wenigstens entlang etwa einem Viertel einer Länge des wenigstens einen feststehenden Klemmflügels oder mehr, besonders bevorzugt etwa entlang einem Drittel der Länge des wenigstens einen feststehenden Klemmflügels oder mehr, gegen die erste Raumrichtung über die Anformung hinaus erstreckt. Dadurch ist der gegen die erste Raumrichtung gesehen sich hinter die Anformung erstreckende Teil des Spaltes ausreichend groß, um bei den üblicherweise verwendeten Bindematerialstärken das Abstreifen der Schlaufe des Knotens nach unten sicher zu gewährleisten.

In einer bevorzugten Ausführungsform ist der schwenkbewegliche Klemmflügel in einer Blickrichtung entgegen der zweiten Raumrichtung, d. h. in einer Draufsicht, zumindest an seinem Ende insbesondere mittig zwischen den beiden feststehenden Klemmflügeln angeordnet, oder die feststehenden Klemmflügel sind spiegelsymmetrisch zu einer sich mittig durch den schwenkbeweglichen Klemmflügel erstreckenden fiktiven Linie angeordnet. Dadurch ergeben sich gleichmäßige Klemmkräfte, wenn der bewegliche Klemmflügel mit den feststehenden Klemmflügeln des Knoterhakens zusammenwirkt. Dies erhöht einerseits die Prozesssicherheit. Andererseits ist diese Anordnung beim Durchziehen der Bindemittelstränge durch die Bindemittelschlaufe vorteilhaft.

Um das Durchziehen der Bindemittelstränge weiter zu vereinfachen, ist es weiterhin bevorzugt, dass die feststehenden Klemmflügel gleichlang ausgebildet sind. Außerdem ist es dafür vorteilhaft, wenn der schwenkbewegliche Klemmflügel kürzer als der wenigstens eine oder die feststehenden Klemmflügel ist. Dadurch können die Bindemittelstränge beim Abziehen der Bindemittelschlaufe vom Knoterhaken weit genug durch die Bindemittelschlaufe gezogen werden, um einen sicher haltenden Schlaufenknoten zu bilden, ohne die Enden der Bindemittelstränge vollständig durch die Bindemittelschlaufe zu ziehen.

Es ist aber auch eine Ausführungsform bevorzugt, bei der entweder ein feststehender Klemmflügel geringfügig kürzer als der andere Klemmflügel ausgebildet ist, oder wenigstens einer der beiden Klemmflügel endseitig abgerundet oder abgeschrägt ist. Dadurch kann sich der Schlaufenknoten gegen Ende des Knotenbildungsvorgangs wenigstens geringfügig zusammenziehen.

Die Anformung ist dafür weiterhin bevorzugt an dem freien Ende des schwenkbeweglichen Flügels angeordnet. Die hakenförmige Gestaltung, insbesondere eine dreieckförmige Gestaltung, ermöglicht dabei ein zuverlässiges Ziehen an den Enden der Bindemittelstränge. Die Anformung erstreckt sich dafür zudem bevorzugt in einem im Wesentlichen rechten Winkel zu einem Schwenkflügel des schwenkbeweglichen Flügels, an dem sie angeordnet ist. Dadurch können die Bindemittelstränge von der Anformung gut abgleiten. Prinzipiell ist auch ein Knoterhaken bevorzugt, bei dem sich die Anformung in einem spitzen Winkel zum Schwenkflügel erstreckt, so dass sie zu einem schaftseitigen Ende des Schwenkflügels hingeneigt ist.

Dabei ist es weiterhin bevorzugt, dass der schwenkbewegliche Klemmflügel zumindest bereichsweise schmaler als der Spalt ausgebildet ist. Dadurch ist seitlich des schwenkbeweglichen Klemmflügels zwischen diesem und jeweils einem der feststehenden Klemmflügel ein Freiraum gebildet. Somit ist das Lösen des Knotens vom Knoterhaken noch weiter erleichtert.

Es ist zudem bevorzugt, dass der Knoterhaken einen Schaft für eine Lagerung im Garnknoter aufweist. Für die Bildung einer Bindemittelschlaufe muss der Knoterhaken eine Drehbewegung um seine eigene Achse ausführen. Eine solche Drehbewegung kann beispielsweise von zumindest einem Zahnsegment eingeleitet werden, welches sich an einer rotierend angetriebenen Knoterscheibe befindet. Die Lagerung des Knoterhakens über einen länglichen Schaft stellt dabei eine wirkungsvolle Lösung zur Beherrschung der in der heutigen Zeit immer höher geschraubten Spannkräfte dar. Dabei sind der Schaft und die feststehenden Klemmflügel bevorzugt in einem Winkel zueinander angeordnet. Vorzugsweise sind sie etwa L- förmig zueinander angeordnet. Dafür weist der Rumpf des Knoterhakens einen Knick auf, der abgerundet ausgebildet ist, so dass der Rumpf im Knick keine Kanten aufweist, an denen sich die Bindemittelstränge aufreiben können. Durch diese Ausbildung ist der für die Drehung des Knoterhakens erforderliche Bauraum gering.

Bevorzugt ist weiterhin eine Ausgestaltung des Spaltes zwischen den beiden feststehenden Klemmflügeln, bei der der Spalt im Wesentlichen u- oder v- förmig ausgebildet ist. Bei einer u- förmigen Ausgestaltung ist der Spalt entlang seiner Länge im Wesentlichen gleich breit ausgebildet. Bei v- förmiger Ausgestaltung verjüngt er sich hingegen zu dem schaftseitigen Ende hin. Da sich der Spalt gegen die erste Raumrichtung zum schaftseitigen Ende hin über die Anformung hinaus erstreckt, ermöglicht ein solcher Spalt das Abstreifen des fertiggestellten Knotens.

In einer besonders bevorzugten Ausführungsform weist der Spalt jedoch schaftseitig zudem eine Aufweitung auf. Dadurch ist er beispielsweise etwa schlüssellochförmig ausgebildet. Dabei ist er zumindest im Bereich seines schaftseitgen Endes vergrößert. Dabei ist es bevorzugt, dass die Anformung im ungeöffneten Zustand in die Aufweitung eintaucht, so dass um die Anformung herum Platz für die Bindemittelstränge verbleibt. Ein fertig gestellter Knoten kann daher nach dem Abstreifen vom Knoterhaken leichter durch den Spalt fallen. In diesem Zusammenhang ist darauf hinzuweisen, dass beim Abstreifen des fertiggestellten Knotens eine Bewegung des Knotens in eine Richtung entgegengesetzt zur zweiten Raumrichtung notwendig ist, nämlich in die Richtung, die zum fertigen Erntegutballen führt.

Eine Länge des Spaltes oder eine Länge des wenigstens einen feststehenden Klemmflügels verhält sich zu einer Länge des Rumpfes in einem Haltebereich des Knoterhakens, der zum Verklemmen von Bindemittelsträngen zwischen dem wenigstens einen feststehenden Klemmflügel und dem schwenkbeweglichen Klemmflügel vorgesehen ist, bevorzugt im Verhältnis 1:1 oder größer, besonders bevorzugt 2:1 oder noch größer. Der sich unterhalb des schwenkbeweglichen Klemmflügels erstreckende Rumpf ist daher im Verhältnis zum Spalt beziehungsweise dem wenigstens einen feststehenden Klemmflügel nur kurz ausgebildet. Er ist im Wesentlichen zur Stabilisierung des Knoterhakens vorgesehen. Der umso größere Spalt erleichtert das Herunterfallen des Knotens am Ende des Knotenbildungsvorgangs. Dafür ist es weiterhin bevorzugt, dass sich eine Stirnwand des Spaltes im Wesentlichen in die zweite Raumrichtung erstreckt, so dass ein fertig gestellter Knoten nicht an der Stirnwand oder einer Kante der Stirnwand hängen bleibt, oder sich aufreibt.

Der Knoterhaken zeichnet sich alternativ zur vorstehend als erfindungsgemäß beschriebenen Ausbildung dadurch aus, dass er nur einen feststehenden Klemmflügel und den schwenkbeweglichen Klemmflügel aufweist, und dass der schwenkbewegliche Klemmflügel zum feststehenden Klemmflügel wenigstens bereichsweise, insbesondere endseitig, und weiter insbesondere in einer dritten Raumrichtung, die sich quer zur ersten und zweiten Raumrichtung erstreckt, seitenversetzt ist. Dadurch ist der schwenkbewegliche Klemmflügel wenigstens bereichsweise neben dem feststehenden Klemmflügel angeordnet.

Obwohl die Bindemittelstränge beim Abstreifen vom Knoterhaken um die insbesondere hakenförmige Anformung gelegt sind, ermöglicht der Spalt und der sich über die Anformung hinaus erstreckende Freiraum unterhalb des schwenkbeweglichen Klemmflügels ein Abziehen des Knotens nach unten, so dass sich der Knoten vom Knoterhaken sicher lösen kann. Ein dafür erforderlicher nach unten gerichteter Zug am Knoten wird durch den Erntegutballen, um den der als Unterfaden dienende Bindemittelstrang gewickelt ist, hervorgerufen. Da der Knoten nach unten abrutscht, ist es dabei auch nicht erforderlich, dass der schwenkbewegliche Klemmflügel zuvor freigegeben wird, um in den geöffneten Zustand nach oben zu verschwenken.

In einer bevorzugten Ausführungsform weist der Knoterhaken, insbesondere wie vorstehend ausführlich beschrieben, einen weiteren feststehenden Klemmflügel auf.

Der weitere feststehende Klemmflügel ist, insbesondere in der dritten Raumrichtung, vom zumindest einen feststehenden Klemmflügel beabstandet. Dadurch bildet der Freiraum einen Spalt zwischen den feststehenden Klemmflügeln. Die Ausgestaltung des Knoterhakens mit zwei feststehenden Klemmflügeln ermöglicht eine vereinfachte Handhabung der beim Bilden des Knotens um den Knoterhaken gewickelten Bindemittelschlaufe, insbesondere beim Abstreifen am Ende des Knotenbildungsvorganges.

Die Aufgabe wird weiterhin gelöst mit einem Garnknoter mit einem solchen Knoterhaken. In besonderes vorteilhafter Weise ergibt sich aus der Anbringung eines Spaltes zwischen den beiden feststehenden Klemmflügeln, der sich schaftseitig über die Anformung hinaus erstreckt, dass dem fertiggestellten Knoten beim Abstreifen vom Knoterhaken ein hinreichendes Maß an Freiraum unterhalb des schwenkbeweglichen Klemmflügels zur Verfügung gestellt ist, um sich in einer auf den Erntegutballen weisenden Richtung vom Knoterhaken zu lösen und fort zu bewegen. Auf der anderen Seite bieten die zwei feststehenden Klemmflügel eine hinreichende Führung, damit in zuverlässiger Weise die Schlaufenbildung mit dem anschließenden Einziehen der freien Enden der Bindemittelstränge die Fertigstellung des Knotens vollzogen werden kann. Bei der Ausführungsform, bei der nur ein feststehender Klemmflügel eingesetzt ist, ist der Aufwand noch einmal minimiert worden.

Die Aufgabe wird weiterhin gelöst mit einer Ballenpresse mit einem solchen Garnknoter. Die Ballenpresse ermöglicht dabei unter Verwendung der aus dem Stand der Technik bekannten Funktionsbaugruppen wie einer Aufnahmevorrichtung zur Aufnahme des zu pressenden Erntegutes, einer Förder- und Schneidvorrichtung zur Beförderung des Erntegutes in einen vorzugsweise quaderförmig ausgebildeten Presskanal, in dem ein hin- und herbeweglich angetriebener Presskolben die Verdichtung des Erntegutes betreibt, eine prozesssichere Herstellung von Erntegutballen, die mit Bindemittelsträngen umgeben sind. In vorteilhafter Weise fallen bei diesem Ballenbildungsvorgang keine Garnreste mehr an, die zu einer Verschmutzung des Futters oder einer Beeinträchtigung der Umwelt führen. Die Ballenpresse ist dazu mit einer Mehrzahl von Garnknotern ausgerüstet.

Im Folgenden wird die Erfindung anhand von Figuren beschrieben. Die Figuren sind lediglich beispielhaft und schränken den allgemeinen Erfindungsgedanken nicht ein. Es zeigen
Fig. 1 (b) zeigt die Knoteranordnung 34 für die Ballenpresse 25 aus Fig. 1 (a). Die Knoteranordnung 34 ist an der Oberseite 38 der Ballenpresse 25 angeordnet und weist die Vielzahl Garnknoter 1 auf. Die Garnknoter 1 sind entlang einer Knoterwelle 37 voneinander beabstandet angeordnet.
Fig. 2 zeigt in (a) - (k) jeweils einen der Garnknoter 1 oder eine vergrößerte Teilansicht des Garnknoters 1 der Knoteranordnung 34 der Fig. 1 (b). Die vergrößerten Ansichten zeigen die Fig. 2 (f) und 2 (j).

Der Garnknoter 1 weist eine Knoterscheibe 8 auf, die drehfest an der Knoterwelle 37 gehaltert ist. Die Knoterscheibe 8 dreht sich daher bei Antrieb der Knoterwelle 37 mit dieser. Zudem weist der Garnknoter 1 einen Knoterrahmen 6 auf, der gegenüber der Knoterwelle 37 drehbar an dieser angeordnet ist, so dass er sich bei Antrieb der Knoterwelle 37 nicht mit dieser dreht und ortsfest in der Ballenpresse 25 angeordnet ist.

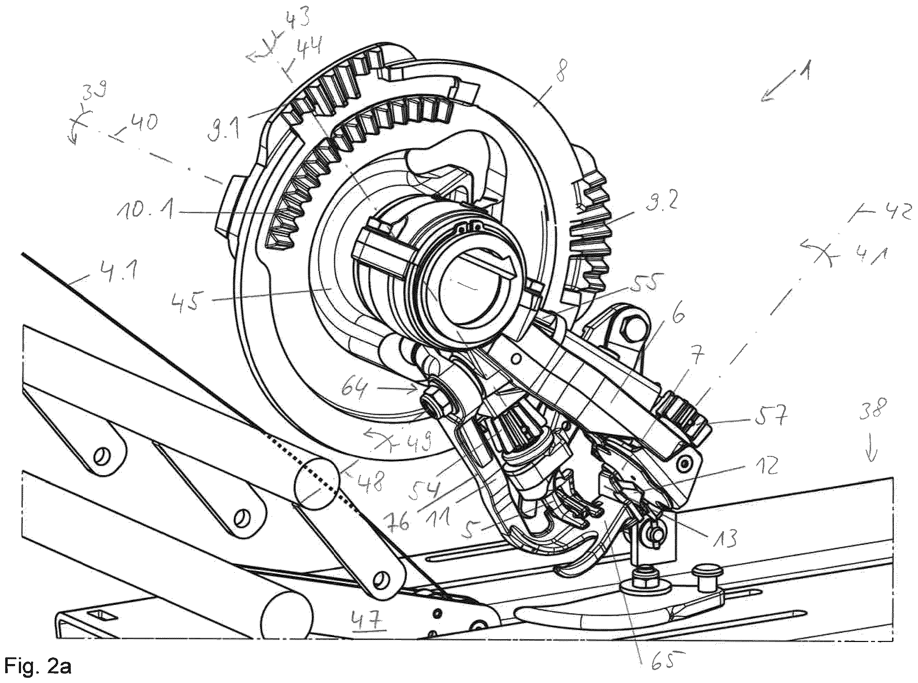

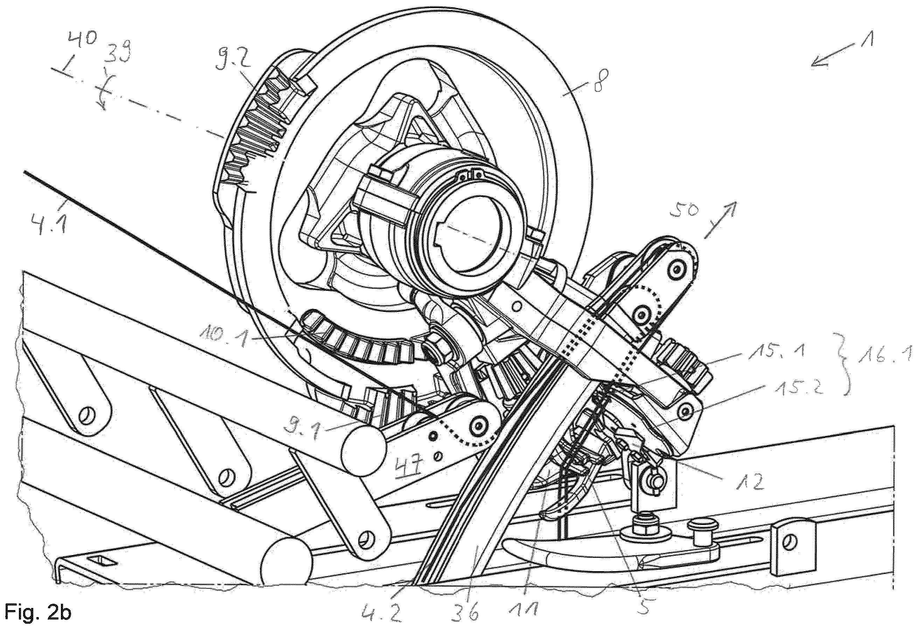

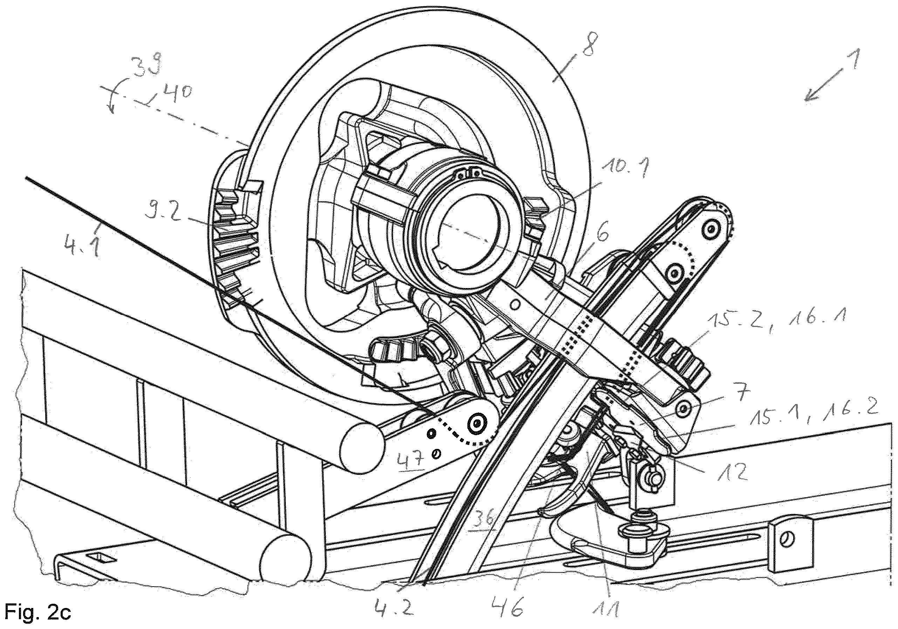

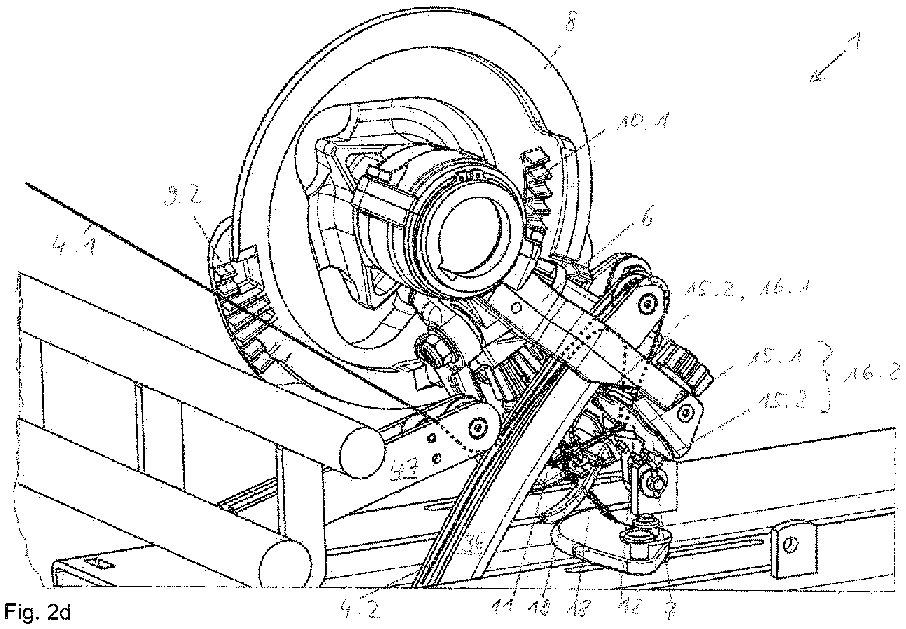

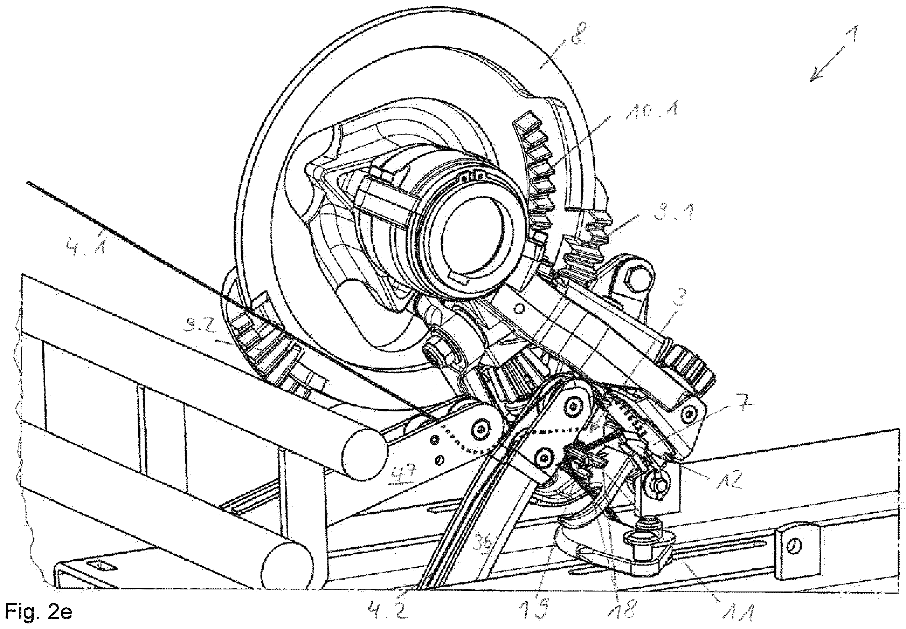

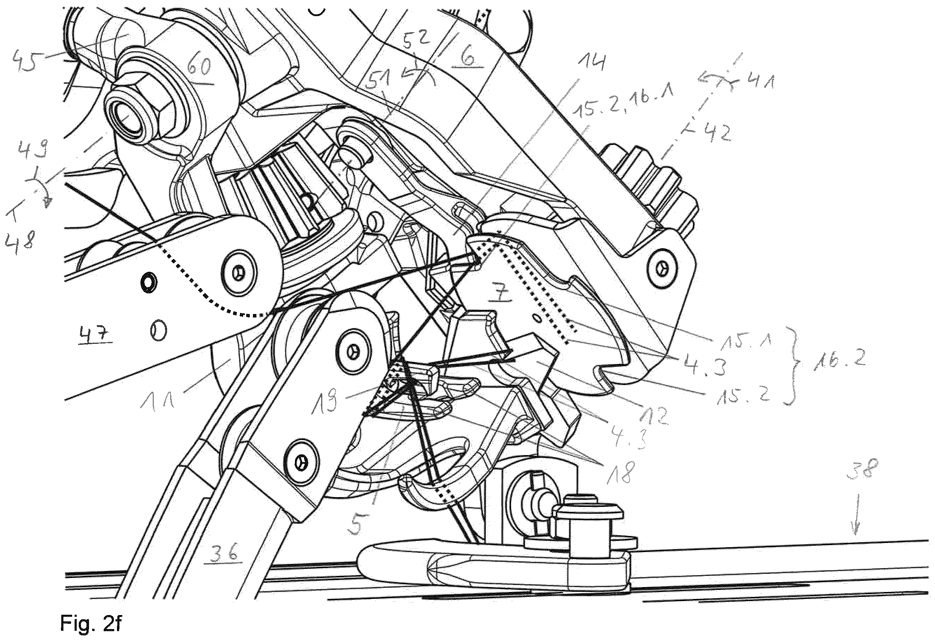

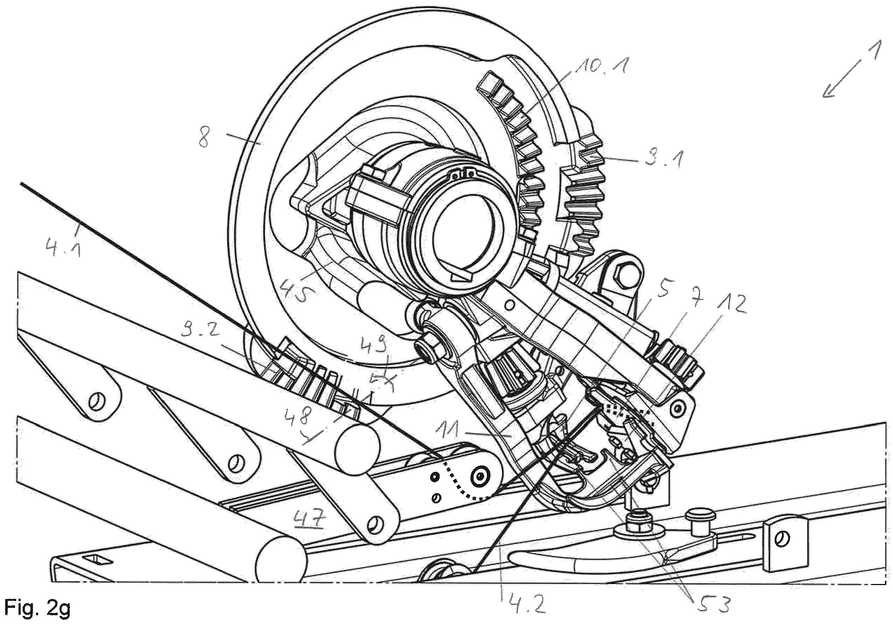

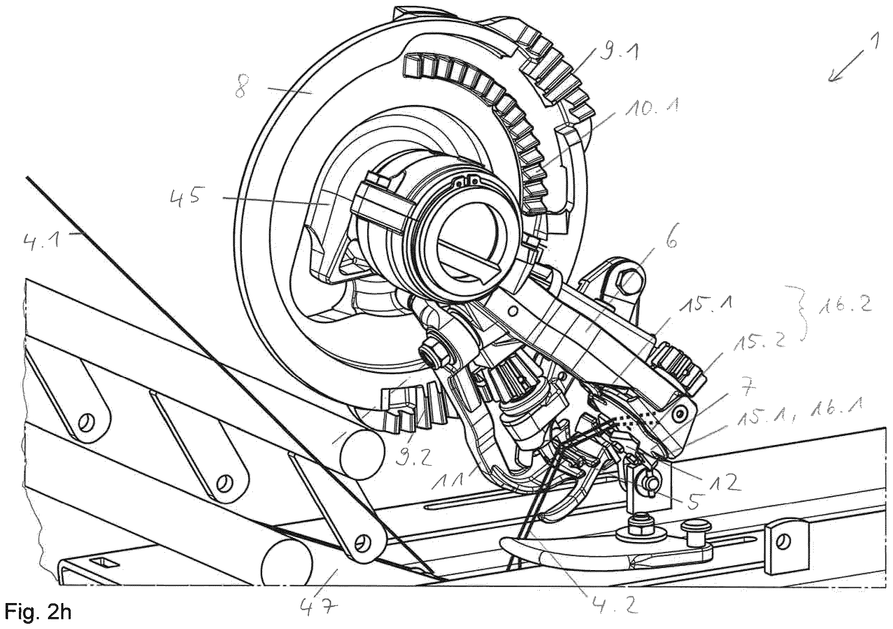

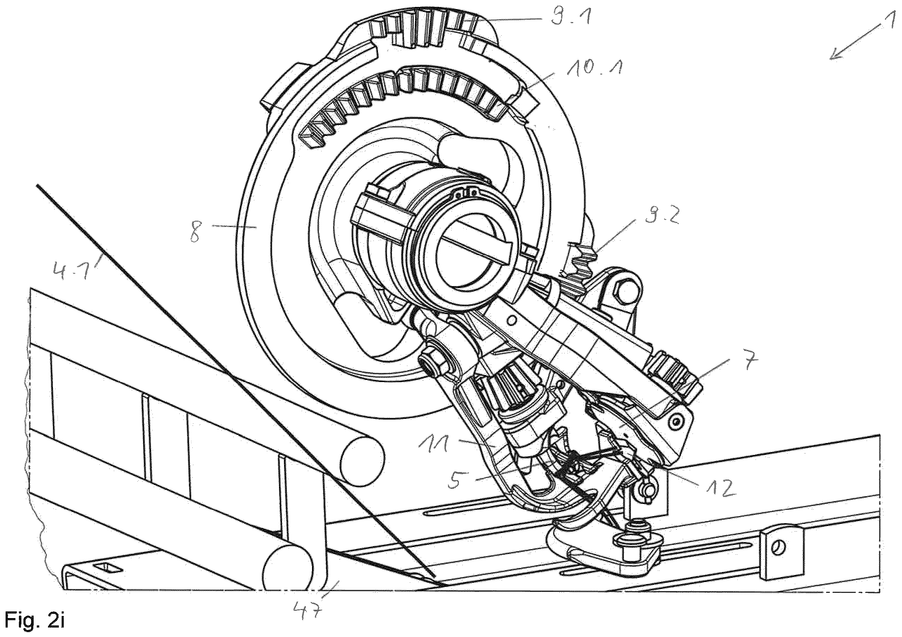

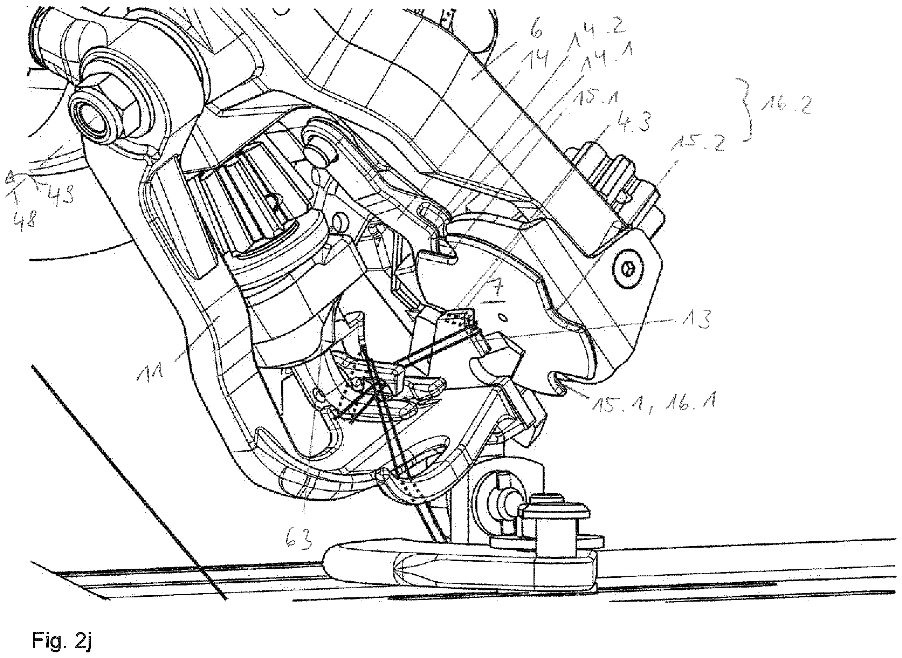

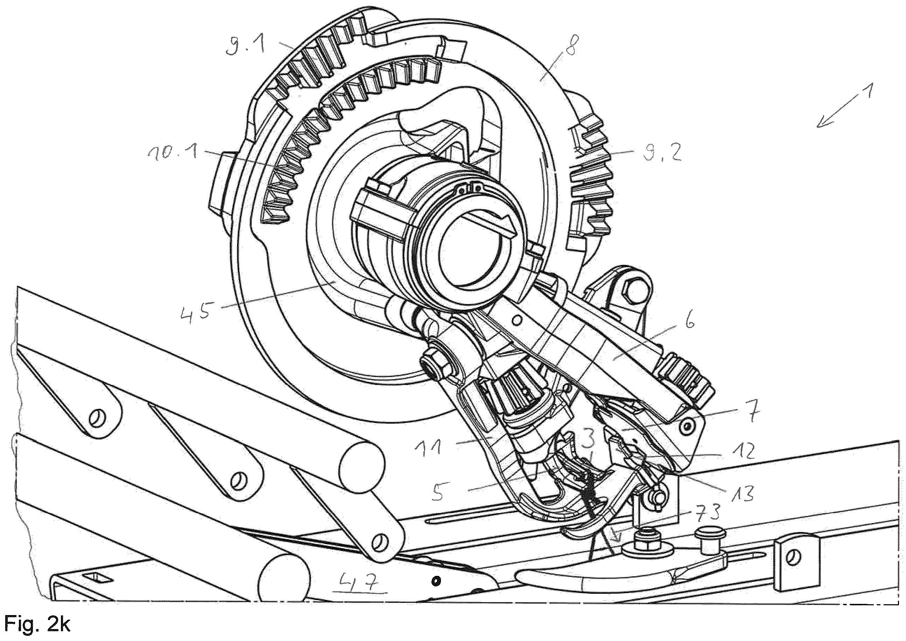

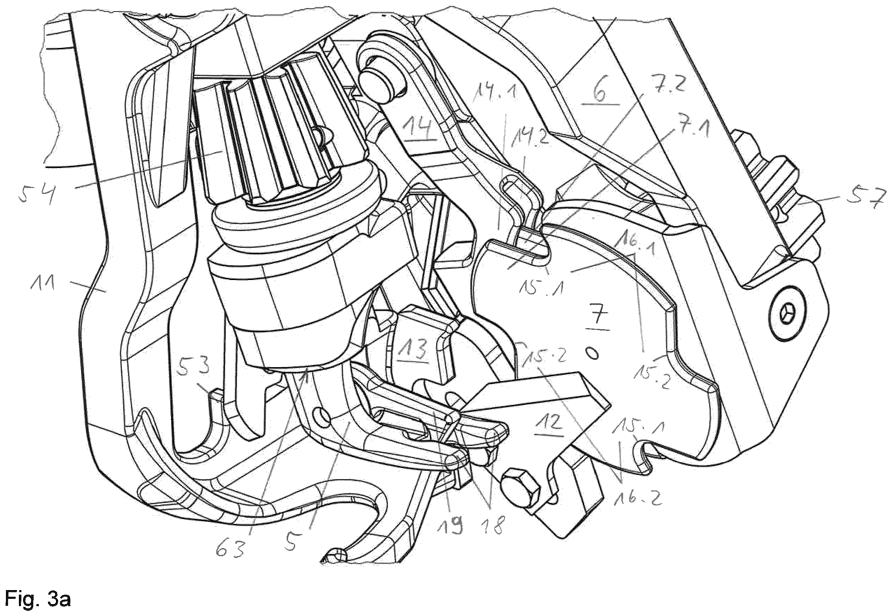

Die Fig. 2 (a) - (e), (g) - (i) und (k) zeigen den Garnknoter 1 in derselben perspektivischen Ansicht jeweils in verschiedenen Antriebszuständen, die dieser bei Antrieb der Knoterwelle 37 durchläuft, wobei sich die Antriebszustände durch einen Drehwinkel (nicht bezeichnet) voneinander unterscheiden, um den sich die Knoterscheibe 8 mit ihr gegenüber einer Nullstellung gedreht hat. Die Fig. 2 (f) zeigt einen vergrößerten Ausschnitt der Fig. 2 (e) und Fig. 2 (j) zeigt einen vergrößerten Ausschnitt der Fig. 2 (i), wobei Fig. 2 (f) und 2 (j) jeweils noch eine weitere perspektivische Ansicht zeigen. Die Fig. 3 (a) zeigt einen vergrößerten Ausschnitt aus dem Garnknoter 1 der Fig. 2 ohne die Bindemittelstränge 4.1, 4.2 bei einem Drehwinkel von etwa 320°.

Der Garnknoter 1 ist dazu ausgebildet, zwei aufeinander folgende Knoten 3 zu bilden, die zum Verbinden des, den Erntegutballen 2 umgebenden Oberfadens 4.1 und Unterfadens 4.2 des Bindemittels miteinander vorgesehen sind. Es handelt sich somit um einen Doppelknoter. Die Begriffe Garnknoter 1 und Doppelknoter werden im Rahmen dieser Erfindung daher synonym verwendet.

Der Garnknoter 1 weist dafür einen Knoterhaken 5 zum Verknoten der Enden 4.3 des Bindemittels 4.1, 4.2 auf, der um eine Knoterhakenachse 44 in eine Knoterhakendrehrichtung 43 drehbar in dem Knoterrahmen 6 gelagert ist.

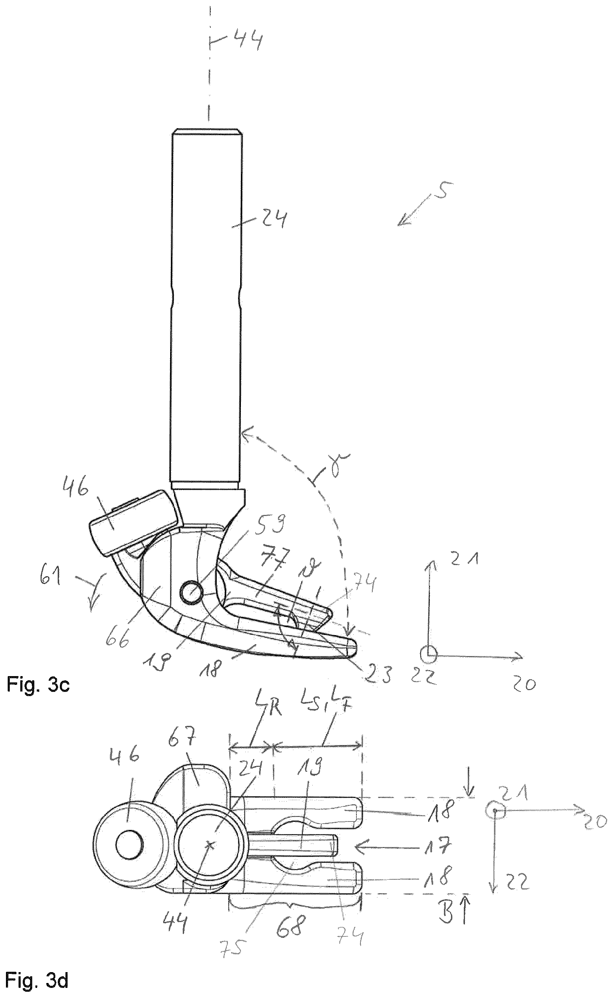

Der Knoterhaken 5 ist in den Fig. 3 (c) und (d) separat dargestellt. Er weist zwei in einer dritten Raumrichtung 22 voneinander beabstandete feststehende Klemmflügel 18 auf, die eine Erstreckungskomponente (nicht gezeigt) in eine erste Raumrichtung 20 aufweisen. Dabei ist die dritte Raumrichtung 22 quer zur ersten Raumrichtung 20 angeordnet. Zwischen den feststehenden Klemmflügeln 18 ist ein etwa schlüssellochförmiger Spalt 17 vorgesehen. In einer zweiten Raumrichtung 21 ist zu den feststehenden Klemmflügeln 18 höhenversetzt zudem ein schwenkbeweglicher Klemmflügel 19 angeordnet. Die zweite Raumrichtung 21 erstreckt sich quer zur ersten Raumrichtung 20 sowie quer zur dritten Raumrichtung 22. Der schwenkbewegliche Klemmflügel 19 weist eine hakenförmige Anformung 23 auf, die sich gegen die zweite Raumrichtung 21 erstreckt, so dass sie in Richtung des Spaltes 17 zeigt. In einem ungeöffneten Zustand (nicht bezeichnet), den die Fig. 3 (c) zeigt, taucht die Anformung 23 zumindest geringfügig in den Spalt 17 ein. Der schwenkbewegliche Klemmflügel 19 ist in einem Schwenkflügellager 59, das in der dritten Raumrichtung 22 oberhalb der feststehenden Klemmflügel 18 angeordnet ist, schwenkbar gelagert.

Zum Verschwenken des schwenkbeweglichen Klemmflügels 19 vom ungeöffneten in einen geöffneten Zustand (nicht gezeigt) weist der Knoterhaken 5 eine Steuerrolle 46 auf, die beim Drehen des Knoterhakens 5 um die Knoterhakenachse 44 entlang einer Steuerkulisse 63 (s. Fig. 3 (a)) abrollt. Die Steuerrolle 46 ist an einer den feststehenden Klemmflügeln 18 abgewandten Seite (nicht bezeichnet) des Knoterhakens 5 angeordnet. Sie ist am schwenkbeweglichen Klemmflügel 19 befestigt und so geformt, dass dieser entsprechend der Kontur der Steuerkulisse in und gegen eine Flügelschwenkrichtung 61 verschwenkt, wenn sich die Steuerrolle 46 entlang der Steuerkulisse abrollt. Beim Verschwenken des schwenkbeweglichen Klemmflügels 19 in Flügelschwenkrichtung 61 öffnet sich dieser gegenüber den feststehenden Klemmflügeln 18. In diesem geöffneten Zustand können Bindemittelstränge 4.1, 4.2 in den Zwischenraum (nicht bezeichnet) zwischen die feststehenden Klemmflügel 18 und den schwenkbeweglichen Klemmflügel 19 eingelegt werden. Beim Zurückschwenken vom geöffneten Zustand in den ungeöffneten Zustand werden die Bindemittelstränge 4.1, 4.2 zwischen den feststehenden Klemmflügeln 18 und dem schwenkbeweglichen Klemmflügel 19 verklemmt.

Der Garnknoter 1 weist zudem eine Halteanordnung (nicht bezeichnet) auf, die zum Halten der Bindemittelstränge 4.1, 4.2 vorgesehen ist. Die Halteanordnung weist eine Garnhaltescheibe 7 auf, die am Knoterrahmen 6 um eine Garnhaltescheibenachse 42 in eine Garnhaltescheibendrehrichtung 41 drehbar gelagert ist. Die Garnhaltescheibe 7 ist zum zeitweisen Fördern der beiden Bindemittelstränge 4.1, 4.2 des Bindemittels vorgesehen.

An ihrer Außenkontur 62 (s. Fig. 3 (c)) weist sie wenigstens eine erste Paarung 16.1 von zwei Ausnehmungen 15.1, 15.2 auf. Dabei ist jede der beiden Ausnehmungen 15.1, 15.2 jeweils für das Aufnehmen der Bindemittelstränge 4.1, 4.2 beim Herstellen eines der beiden Knoten 3 vorgesehen. In Bezug auf eine Drehbewegung der Garnhaltescheibe 7 in Garnhaltescheibendrehrichtung 41 um die Garnhaltescheibenachse 42 sind die Ausnehmungen 15.1, 15.2 um einen Versatzwinkel α, der größer als 90° ist, entgegen der Uhrzeigerrichtung verdreht zueinander angeordnet. Die in Bezug auf die Drehbewegung in Garnhaltescheibendrehrichtung 41 frühere Ausnehmung 15.1 ist zur Aufnahme der Bindemittelstränge 4.1, 4.2 für den ersten der beiden Knoten 3, und die in Bezug auf die Drehbewegung in Garnhaltescheibendrehrichtung 41 spätere Ausnehmung 15.2 ist zur Aufnahme der Bindemittelstränge 4.1, 4.2 für den zweiten der beiden Knoten 3 vorgesehen. Der über die 90° hinausgehende Versatzwinkel α ermöglicht ein sicheres erneutes Einlegen der Bindemittelstränge 4.1, 4.2 in die Garnhaltescheibe 7 für die Herstellung des zweiten Knotens 3.

Die hier genutzte Garnhaltescheibe 7 weist zudem eine zweite Paarung 16.2 von Ausnehmungen 15.1, 15.2 auf, die zum Herstellen eines folgenden Knotenpaars 3 vorgesehen ist. Die beiden Paarungen 16.1, 16.2 von Ausnehmungen 15.1, 15.2 sind dafür an der Garnhaltescheibe 7 um 180° verdreht zueinander angeordnet.

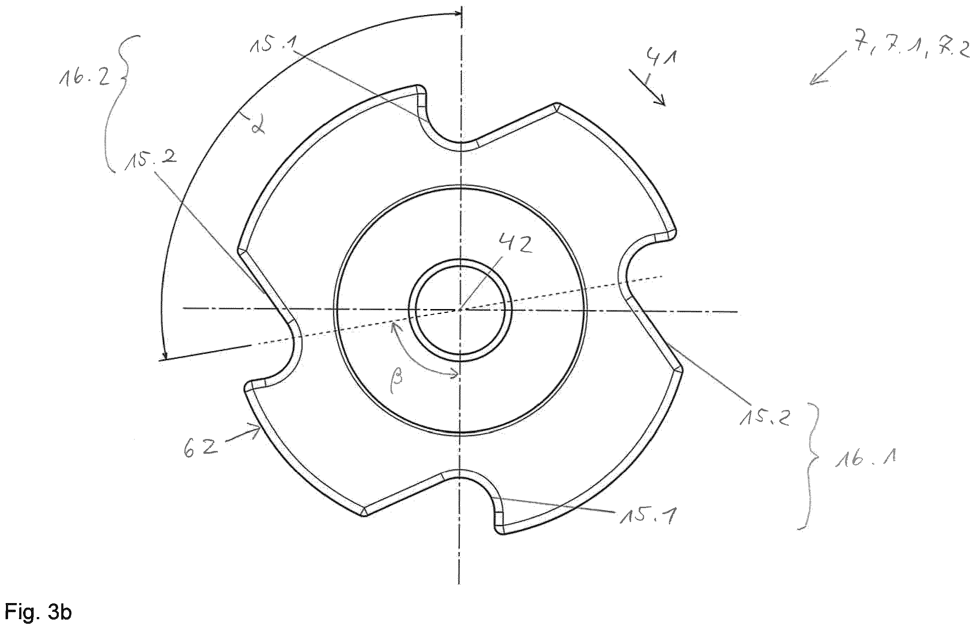

Die Garnhaltescheibe 7 umfasst hier zwei zueinander parallele Scheiben 7.1, 7.2 (s. Fig. 3 (a)) derselben Größe, die voneinander beabstandet sind und zwischen denen sich ein Anschlag (nicht gezeigt) konzentrisch um die Garnhaltescheibenachse 42 erstreckt. Beide Scheiben 7.1, 7.2 der Garnhaltescheibe 7 weisen daher beide Paare 16.1, 16.2 Ausnehmungen 15.1, 15.2 auf. Zudem sind die Ausnehmungen 15.1, 15.2 in demselben Drehwinkel (s. Fig. 3 (b)) angeordnet.

Die Halteanordnung umfasst weiterhin einen Garnklemmhebel 14 (s. Fig. 3 (a), 2 (f)), wobei der Garnklemmhebel 14 mit der Garnhaltescheibe 7 zusammenwirkt, um die Bindemittelstränge 4.1, 4.2 in einer der Ausnehmungen 15.1, 15.2 festzuhalten. Der Garnklemmhebel 14 weist dafür wenigstens eine Klemmstrebe 14.1 auf, die zwischen den Scheiben 7.1, 7.2 der Garnklemmscheibe 7 angeordnet ist. Im vorliegenden Ausführungsbeispiel weist er zudem eine weitere Klemmstrebe 14.2 auf, die zur wenigstens einen Klemmstrebe 14.1 im Wesentlichen parallel angeordnet ist. Die zweite Klemmstrebe 14.2 verbessert das Halten der Bindemittelstränge 4.1, 4.2 gegenüber nur einer Klemmstrebe 14.1.

Die wenigstens eine Klemmstrebe 14.1 ist zwischen den beiden Scheiben 7.1, 7.2 der Garnklemmscheibe 7 angeordnet. Sie liegt an dem Anschlag der Garnhaltescheibe 7 an, wenn kein Bindemittelstrang 4.1, 4.2 in die Garnhaltescheibe 7 eingelegt ist.

Der Garnklemmhebel 14 wird mit der Kraft einer Feder (nicht gezeigt) um eine Klemmachse 51 in eine Klemmrichtung 52 gegen den Anschlag gedrückt. Beim Drehen der Garnhaltescheibe 7 werden die in die Ausnehmung 15.1, 15.2 eingelegten Bindemittelstränge 4.1, 4.2 zwischen der Garnhaltescheibe 7 und dem Garnklemmhebel 14 verklemmt. Da der Garnklemmhebel 14 lediglich mit der Kraft der Feder gegen den Anschlag gedrückt wird, kann er, insbesondere bei dickeren Bindemitteln, zumindest geringfügig gegen die Klemmrichtung 52 ausweichen. Die Kraft der Feder ist aber ausreichend groß vorgesehen, um ein sicheres Halten der Bindemittelstränge 4.1, 4.2 beim Herstellen des Knotens 3 zu gewährleisten.

Weiterhin weist der Garnknoter 1 die umlaufend antreibbare Knoterscheibe 8 auf. Die Knoterscheibe 8 erstreckt sich konzentrisch um eine Knoterscheibenachse 40, die sich in Richtung der Knoterwelle 37 erstreckt. An der Knoterscheibe 8 sind für jeden der beiden Knoten 3 jeweils erste Antriebsmittel 9.1, 9.2 zum Antrieb des Knoterhakens 5 angeordnet. Zum Antrieb des Knoterhakens 5 ist an einem Schaft 24 (s. Fig. 3 (c)) des Knoterhakens 5 ein Antriebsrad 54 drehfest befestigt. Die ersten Antriebsmittel 9.1, 9.2 sind als Zahnsegmente ausgebildet, die beim Umlauf der Knoterscheibe 8 in Eingriff mit Zähnen (nicht bezeichnet) des Antriebsrades 54 geraten, so dass das Antriebsrad 54 beim Umlauf der Knoterscheibe 8 in eine Drehrichtung 30 angetrieben wird. Dadurch wird der Knoterhaken 5 um die Knoterhakenachse 44 in die Knoterhakendrehrichtung 43 gedreht.

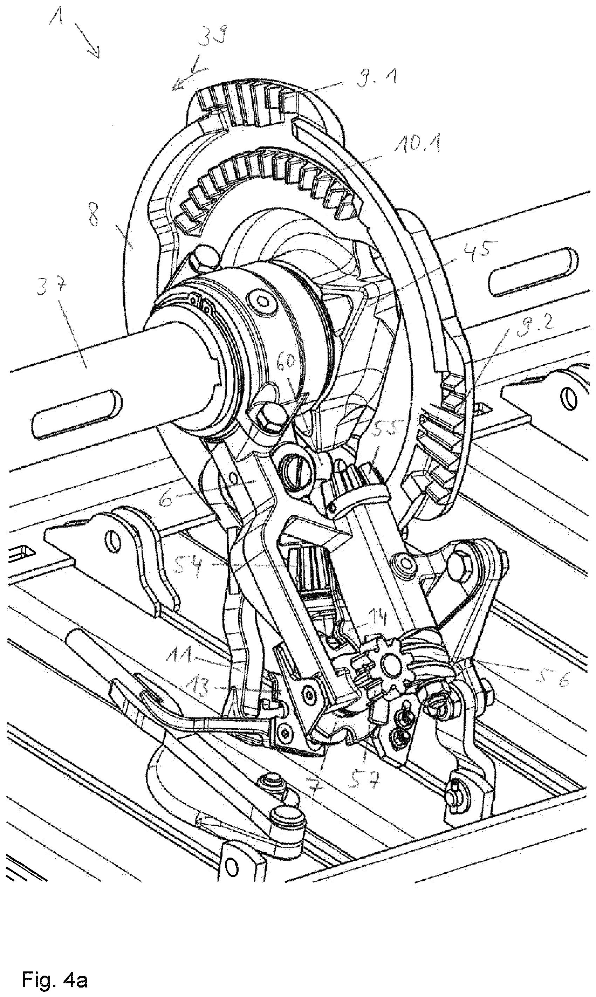

Zudem ist an der Knoterscheibe 8 wenigsten ein zweites Antriebsmittel 10.1 zum Antrieb der Garnhaltescheibe 7 angeordnet. Auch das zweite Antriebsmittel 10.1 ist als Zahnsegment ausgebildet. Zum Antrieb der Garnhaltescheibe 7 ist ein Triebel 55 am Knoterrahmen 6 befestigt (s. hierzu Fig. 4(a)), dessen Zähne (nicht bezeichnet) beim Umlauf der Knoterscheibe 8 mit dem zweiten Antriebsmittel 10.1 in Eingriff geraten. Dadurch wird der Triebel 55 angetrieben. Der Triebel 55 ist endseitig eines Triebelschafts (nicht gezeigt) angeordnet, an dessen gegenüberliegendem Ende (nicht bezeichnet) ein Schneckenrad 56 vorgesehen ist. Das Schneckenrad 56 kämmt mit einem Scheibenrad 57, so dass sich dieses beim Antrieb des Schneckenrades 56 um die Garnhaltescheibenachse 42 in die Garnhaltescheibendrehrichtung 41 dreht. Auch das Scheibenrad 57 ist endseitig eines Scheibenschafts (nicht gezeigt) angeordnet, an dessen gegenüberliegendem Ende (nicht bezeichnet) die Garnhaltescheibe 7 drehfest befestigt ist. Die Garhaltescheibe 7 dreht sich daher bei Antrieb des Scheibenrades 57 mit diesem.

Das als Zahnsegment ausgebildete zweite Antriebsmittel 10.1, der Triebel 55, das Schneckenrad 56 sowie das Scheibenrad 57 sind hier so aufeinander abgestimmt, dass eine Übersetzung ins Langsamere von 1 : 4 erfolgt. In Abhängigkeit von einem Durchmesser (nicht bezeichnet) der Knoterscheibe 8, einem Durchmesser (nicht bezeichnet) der Garnhaltescheibe 7 und der Zähnezahl (nicht bezeichnet) an diesen Komponenten kann aber auch eine andere Untersetzung vorgesehen sein.

Der Garnknoter 1 weist weiterhin einen Abstreifhebel 11 zum Abstreifen der Knoten 3 vom Knoterhaken 5 auf. Der Abstreifhebel 11 ist um ein Schwenklager 64, durch das sich eine Schwenkachse 48 erstreckt, in und gegen eine Schwenkrichtung 49 schwenkbar.

Der Abstreifhebel 11 ist etwa L- förmig ausgebildet. Er weist einen Arm 76 (s. Fig. 2 (a)) auf, der sich vom Schwenklager 64 ausgehend zu einer sich etwa quer zu ihm erstreckenden Querplatte 65 erstreckt.

An der Knoterscheibe 8 ist eine Abstreifkulisse 45 angeordnet, an der sich eine Laufrolle 60 (s. Fig. 4 (a)), die am Abstreifhebel 11 angeordnet ist, abrollt. Der Abstreifhebel 11 wird in Abhängigkeit vom Verlauf der Abstreifkulisse 45 um die Schwenkachse 48 in die Schwenkrichtung 49 und zurück verschwenkt. Am Abstreifhebel 11 sind stiftförmige Abzieher 53 angeordnet, die voneinander beabstandet sind. Ein Abstand (nicht bezeichnet) der Abzieher 53 voneinander ist geringfügig größer als eine Breite B (s. Fig. 3 (d)) des Knoterhakens 5. Die Abzieher 53 sind zum Abziehen eines Knotens 3 vom Knoterhaken 5 vorgesehen. Dafür wird der Abstreifhebel 11 in die Schwenkrichtung 49 verschwenkt. Nach dem Abziehen wird der Abstreifhebel 11 wieder zurück verschwenkt.

Weiterhin weist der Abstreifhebel 11 einen Auszieher 13 auf. Der Auszieher 13 erstreckt sich etwa parallel zum Arm 76 und ist von diesem beabstandet. Er ist an der Querplatte 65 befestigt. Mit dem Auszieher 13 sind die Enden 4.3 der Bindemittelstränge 4.1, 4.2 zum Fertigstellen des zweiten Knotens 3 aus der Halteanordnung herausziehbar.

Zum Durchtrennen der Bindemittelstränge 4.1, 4.2 ist im Garnknoter 1 zudem eine Messerklinge 12 gehaltert. Die Messerklinge 12 ist so positioniert, dass die Garnhaltescheibe 7 beim Drehen in die Garnhaltedrehrichtung 41 entlang der Messerklinge 12 geführt wird. Dadurch werden die in die Halteanordnung eingelegten Bindemittelstränge 4.1, 4.2 beim Passieren der Messerklinge 12 durchtrennt. Die Messerklinge 12 kann dafür im Wesentlichen ortsfest im Garnknoter 1, insbesondere am Knoterrahmen, befestigt sein. In der hier dargestellten Ausführungsform ist sie am Garnklemmhebel 14 angebracht. In dieser Ausführungsform kann sie beim Ausweichen des Garnklemmhebels 14 in Abhängigkeit von der Dicke des verwendeten Bindemittels mit diesem geringfügig ausweichen. Daher ist die Messerklinge 12 bei dieser Ausführungsform nicht ortsfest im Garnknoter 1 befestigt, sondern bewegt sich beim Ausweichen des Garnklemmhebels 14 mit diesem. Durch den Wortlaut "im Wesentlichen" wird diesem Sachverhalt im Rahmen dieser Erfindung Rechnung getragen.

Um die beiden aufeinander folgenden Knoten 3 herzustellen, ohne dabei einen Bindemittelrest für jeden Bindemittelstrang 4.1, 4.2 zu erzeugen, sieht die vorliegende Erfindung vor, dass die Bindemittelstränge 4.1, 4.2 nur einmal zwischen dem ersten und zweiten Knoten 3 durchtrennt werden. Weiterhin sieht die vorliegende Erfindung vor, dass die Garnhaltescheibe 7 beim Fertigstellen des zweiten Knotens 3 angehalten wird, bevor die Bindemittelstränge 4.1, 4.2 die Messerklinge 12 passieren. Da die Garnhaltescheibe 7 bereits vor dem erneuten Passieren der Messerklinge 12 anhält, werden die Bindemittelstränge 4.1, 4.2 beim Herstellen des zweiten Knotens 3 gar nicht durchtrennt. Dadurch fällt auch bei der Herstellung dieses Knotens 3 kein Bindemittelrest pro Bindemittelstrang 4.1, 4.2 an.

Die Herstellung der beiden Knoten 3 mit dem Garnknoter 1 wird im Folgenden anhand der Fig. 2 (a) - (k) schrittweise erläutert.

Fig. 2 (a) zeigt den Garnknoter 1 in der Nullstellung. In der Nullstellung kann ein Knoten 3 sich vom Knoterhaken 5 lösen, wenn auf ihn eine Zugkraft 73 wirkt, die insbesondere vom Erntegutballen 2 hervorgerufen ist, und die eine Erstreckungskomponente gegen eine zweite Raumrichtung 21 aufweist, in die sich ein Schaft 24 (s. Fig. 3 (c) - (e)) des Knoterhakens 5 erstreckt. In der Nullstellung sind weder das Antriebsrad 54 zum Antrieb des Knoterhakens 5 noch der Triebel 55 zum Antrieb der Garnhaltescheibe 7 in Eingriff mit einem ihrer Antriebsmittel 9.1, 9.2, 10.1 auf der Knoterscheibe 8. Der Knoterhaken 5 und die Garnhaltescheibe 7 werden daher in der Nullstellung nicht angetrieben. Der Abstreifhebel 11 befindet sich in der Nullstellung in einer um die Schwenkachse 48 in Schwenkrichtung 49 noch geringfügig ausgeschwenkten Position. Ein Oberfaden 4.1 ist durch die Obergarnnadel 47 geführt. Dadurch ist eine im Abstreifhebel 11 vorgesehene, insbesondere etwa u- förmige, Aussparung (nicht bezeichnet) unterhalb des Knoterhakens 5 angeordnet.

Fig. 2 (b) zeigt den Garnknoter 1 in einer um einen Drehwinkel von 150° gedrehten Stellung. Auch in dieser Stellung haben sich weder der Knoterhaken 5 noch die Garnhaltescheibe 7 gedreht. Der Abstreifhebel 11 ist gegen die Schwenkrichtung 49 zurückgeschwenkt. Zudem ist die Untergarnnadel 36 in eine Zuführrichtung 50 in den Garnknoter 1 eingeschwenkt. Die Untergarnnadel 36 befindet sich daher in einem Aufwärtsgang. Sie führt den Unterfaden 4.2 mit sich. Außerdem nimmt sie beim Einschwenken in den Garnknoter 1 den Oberfaden 4.1 mit. Oberfaden 4.1 und Unterfaden 4.2 werden beim Einschwenken der Untergarnnadel 36 in die erste Ausnehmung 15.1 der beiden Ausnehmungen 15.1, 15.2 der ersten Paarung 16.1 der Garnhaltescheibe 7 eingelegt. Fig. 2 (b) zeigt die in die erste Ausnehmung 15.1 eingelegten Bindemittelstränge 4.1, 4.2. Das Einlegen erfolgt daher im Aufwärtsgang der Unternadel 36.

Fig. 2 (c) zeigt den Garnknoter 1 in einer um einen Drehwinkel von 185° gedrehten Stellung. In dieser Stellung ist die Garnhaltescheibe 7 soweit gedreht, dass die Bindemittelstränge 4.1, 4.2 in der Halteanordnung zwischen der Garnhaltescheibe 7 und dem Garnklemmhebel 14 verklemmt sind. Der Garnklemmhebel 14 klemmt die Bindemittelstränge 4.1, 4.2 dabei mit der Kraft der Feder.

Zudem befindet sich in dieser Stellung das Antriebsrad 54 in Eingriff mit dem ersten der beiden ersten Antriebsmittel 9.1, 9.2 auf der Knoterscheibe 8, so dass der Knoterhaken 5 von der Knoterscheibe 8 angetrieben wird, und sich um die Knoterhakenachse 44 in die Knoterhakendrehrichtung 43 dreht. Sichtbar ist hier die rückseitig des Knoterhakens 5 angeordnete und zum Antrieb des schwenkbeweglichen Klemmflügels 19 vorgesehene Steuerrolle 46.

Beim Drehen werden die Bindemittelstränge 4.1, 4.2 um den Knoterhaken 5 gewickelt. Dabei entsteht eine Schlaufe (nicht bezeichnet) um den Knoterhaken 5.

Fig. 2 (d) zeigt den Garnknoter 1 in einer um einen Drehwinkel von 205° gedrehten Stellung. In dieser Stellung hat sich der Knoterhaken 5 vollständig um seine Knoterhakenachse 44 gedreht. Dabei wurde die Steuerrolle 46 des Knoterhakens 5 vollständig entlang der Steuerkulisse 63 für das Öffnen und Schließen des schwenkbeweglichen Klemmflügels 19 geführt. Dabei wurden die Bindemittelstränge 4.1, 4.2 zwischen die feststehenden Klemmflügel 18 und den schwenkbeweglichen Klemmflügel 19 eingelegt und liegen vor der Anformung 20 des schwenkbeweglichen Klemmflügels 19.

Die Garnhaltescheibe 7 hat sich zudem soweit gedreht, dass die in der Halteanordnung verklemmten Bindemittelstränge 4.1, 4.2 nun vor einer Schneidkante der Messerklinge 12 angeordnet sind.

Weiterhin ist die Untergarnnadel 36 bereits geringfügig gegen die Zuführrichtung 50 zurückgeschwenkt. Sie befindet sich daher im Abwärtsgang.

Fig. 2 (e) zeigt den Garnknoter 1 in einer um einen Drehwinkel von 220° gedrehten Stellung. In dieser Stellung hat sich die Garnhaltescheibe 7 soweit gedreht, dass die Bindemittelstränge 4.1, 4.2 die Messerklinge 12 passiert haben und von ihr dabei durchtrennt wurden. Die Bindemittelstränge 4.1, 4.2 teilen sich daher nun in erste erntegutballenseitige Bindemittelstränge 4.1, 4.2 und zweite unternadelseitige Bindemittelstränge 4.1, 4.2.

Die unternadelseitigen Bindemittelstränge 4.1, 4.2 wurden beim Weiterdrehen der Garnhaltescheibe 7 zudem in die zweite Ausnehmung 15.2 der ersten Paarung 16.1 von Ausnehmungen 15.1, 15.2 eingelegt. Bei der Herstellung des zweiten Knotens 3 werden die Bindemittelstränge 4.1, 4.2 daher im Abwärtsgang der Unternadel 36 in die Garnhaltescheibe 7 eingelegt.

Fig. 2 (f) zeigt einen vergrößerten Ausschnitt der Fig. 2 (e). Sichtbar sind die um den Knoterhaken 5 gewickelten erntegutballenseitigen Bindemittelstränge 4.1, 4.2 unmittelbar vor dem Abziehen des ersten Knotens 3 vom Knoterhaken 5. Beim Abziehen der Bindemittelstränge 4.1, 4.2 vom Knoterhaken 5 werden die zwischen den feststehenden Klemmflügeln 18 und dem schwenkbeweglichen Klemmflügel 19 eingelegten Bindemittelstränge 4.1, 4.2 mit Hilfe der Anformung 20 am schwenkbeweglichen Klemmflügel 19 durch die um den Knoterhaken 5 gewickelte Schlaufe der Bindemittelstränge 4.1, 4.2 gezogen. Dabei wird der erste Knoten 3 gebildet.

Die Bindemittelstränge 4.1, 4.2 werden beziehungsweise der erste Knoten 3 wird mittels des Abtreifhebels 11 vom Knoterhaken 5 geschoben. Dafür wird die Laufrolle 60 des Abstreifhebels 11 entlang der Abstreifkulisse 45 geführt. Die Abstreifkulisse 45 weist zwei Nocken (nicht bezeichnet) auf, so dass der Abstreifhebel 11 bei einem Umlauf der Knoterscheibe 8 zweimal vorgeschwenkt wird, um dabei jeweils einen Knoten 3 vom Knoterhaken 5 zu schieben. Zum Schieben des Knotens 3 vom Knoterhaken 5 werden die voneinander beabstandeten stiftförmigen Abzieher 53 des Abstreifhebels 11 genutzt.

Damit der Knoten 3 zum Erntegutballen fallen kann, ist im Knoterhaken der Spalt 17 vorgesehen. Der fertige Knoten 3 fällt durch den Spalt 17 zum Erntegutballen.

Fig. 2 (g) zeigt den Garnknoter 1 in einer um einen Drehwinkel von 240° gedrehten Stellung. In dieser Stellung ist der Abstreifhebel 11 in Schwenkrichtung 49 verschwenkt und hat den Knoten 3 vom Knoterhaken 5 geschoben. Die Unternadel 36 ist noch weiter gegen die Zuführrichtung 50 zurückgeschwenkt.

Fig. 2 (h) zeigt den Garnknoter 1 in einer um einen Drehwinkel von 280° gedrehten Stellung. In dieser Stellung befindet sich die Garnhaltescheibe 7 in einer Endposition. Sie wir im Rahmen des aktuellen Umlaufs der Knoterscheibe 8 nicht mehr weiter angetrieben. Die in der Halteanordnung verklemmten Bindemittelstränge 4.1, 4.2 sind dabei unmittelbar vor der Messerklinge 12 angeordnet.

Der Abstreifhebel 11 ist in Fig. 2 (h) gegen die Schwenkrichtung 48 zurückgeschwenkt. Zudem ist die Untergarnnadel 36 bei diesem Drehwinkel gegen die Zuführrichtung 50 zurückgeschwenkt.

Das zweite der ersten Antriebsmittel 9.2 an der Knoterscheibe 8 hat das Antriebsrad 54 des Knoterhakens 5 erreicht. Dadurch gerät das Antriebsrad 54 in Eingriff mit diesem ersten Antriebsmittel 9.2. Der Garnknoter 1 befindet sich somit unmittelbar vor der Bildung des zweiten Knotens 3.

Fig. 2 (i) zeigt den Garnknoter 1 in einer um einen Drehwinkel von 330° gedrehten Stellung. Der Knoterhaken 5 hat die zweite vollständige Drehung um die Knoterhakenachse 44 vollzogen. Es wurde daher eine Schlaufe um den Knoterhaken 5 gebildet und die Bindemittelstränge 4.1, 4.2 zudem unter den schwenkbeweglichen Klemmflügel 19 eingelegt. Die Darstellung zeigt daher den zweiten Knoten 3 unmittelbar vor dem Abschieben durch den Abstreifhebel 11.

Fig. 2 (j) zeigt dies in einem vergrößerten Ausschnitt. Sichtbar ist, dass sich der Abstreifhebel 11 in einer Schwenkbewegung in Schwenkrichtung 49 befindet. Da die Bindemittelstränge 4.1, 4.2 noch in der Halteanordnung verklemmt sind, gerät der am Abstreifhebel 11 befestigte Auszieher 13 in Anlage an die Bindemittelstränge 4.1, 4.2 und zieht die Enden 4.3 der Bindemittelstränge 4.1, 4.2 bei der Schwenkbewegung des Abstreifhebels 11 aus der Halteanordnung. Zudem wird der zweite Knoten 3 analog zum ersten Knoten 3 dabei mittels der stiftförmigen Abzieher 53 vom Knoterhaken 5 geschoben.

Fig. 2 (k) zeigt den Garnknoter 1 in einer um einen Drehwinkel von 360° gedrehten Stellung. Er befindet sich in der Nullstellung (s. Fig. 2 (a)). Der Auszieher 13 hat die Enden 4.3 der Bindemittelstränge 4.1, 4.2 gezogen und die Abzieher 53 haben den zweiten Knoten 3 vom Knoterhaken 5 geschoben. Auch der zweite Knoten 3 fällt gegen die zweite Richtung 21 durch den Spalt 17 im Knoterhaken 5 zum Erntegutballen. Der Abstreifhebel 11 befindet sich in einer Schwenkbewegung gegen die Schwenkrichtung 49.

In Fig. 2 (k) ist die zum Erntegutballen hin gerichtete Zugkraft 73, mit der der Knoten 3 vom Knoterhaken gezogen wird, so dass er von diesem herunterfällt, schematisch dargestellt.

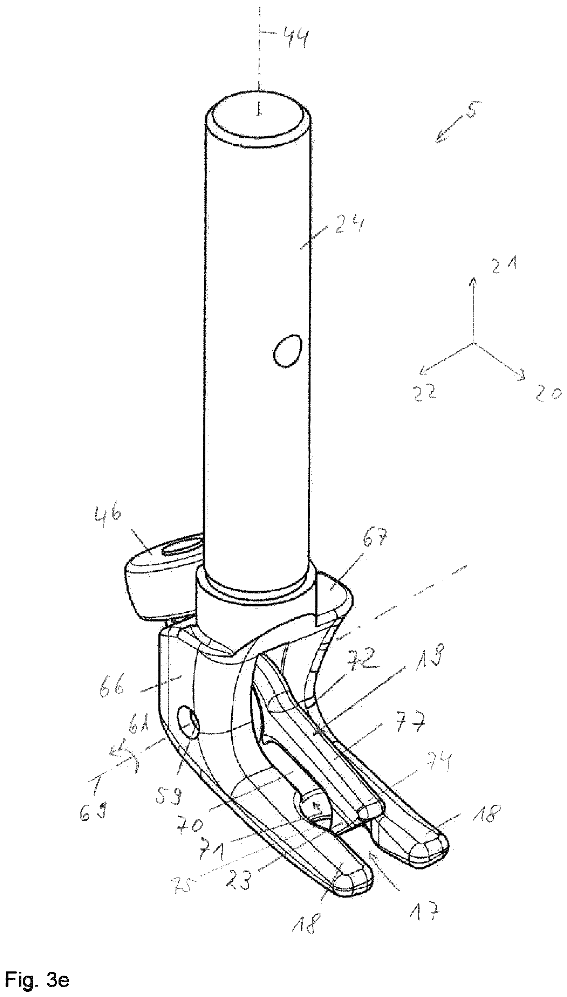

Fig. 3 zeigt in (a) eine vergrößerte Teilansicht des Garnknoters 1 der Fig. 2 (b), in (b) eine Garnhaltescheibe 7 für den Garnknoter 1 aus (a), in (c) einen Knoterhaken 5 für den Garnknoter 1 aus (a) in einer Seitenansicht, in (d) eine Draufsicht auf den Knoterhaken 5 aus (c), und in (e) eine perspektivische Ansicht des Knoterhakens aus (c).

Fig. 3 (b) zeigt eine von vielen möglichen Ausführungsformgen der Garnhaltescheibe 7 in einer Seitenansicht. Die hier dargestellte Garnhaltescheibe 7 ist für die Herstellung von zwei Knotenpaaren 3 ausgebildet. Sichtbar ist eine der Scheiben 7.1 die Garnhaltescheibe 7 mit den zwei Paarungen 16.1, 16.2 von Ausnehmungen 15.1, 15.2. Die Garnhaltescheibe 7 kann aber auch für nur ein Paar Knoten 3, oder für drei oder mehr Knotenpaare 3 ausgebildet sein. Prinzipiell ist es aber auch möglich, die Garnhaltescheibe 7 für eine ungeradzahlige Anzahl von Knoten 3 auszulegen, so dass eine Ausnehmung 15.1, 15.2 der Garnhaltescheibe 7 abwechselnd für die Herstellung des ersten der beiden Knoten 3 und dann für die Herstellung des zweiten der beiden Knoten 3 genutzt wird.

Bei der dargestellten Garnhaltescheibe 7 ist zwischen den Ausnehmungen eines Knotenpaares 3 jeweils ein Versatzwinkel α von 100° vorgesehen. Bei der gewählten Untersetzung zwischen der Knoterscheibe 8 und der Garnhaltescheibe 7 ist ein Versatzwinkel α von größer 90° erforderlich, um in die zweite der beiden Ausnehmungen 15.2 die Bindemittelstränge 4.1, 4.2 einlegen zu können. Der Versatzwinkel α kann aber auch deutlich größer als 90° sein, und insbesondere bis zu ca. 150° betragen.

Zwischen den beiden Paaren 16.1, 16.2 von Ausnehmungen 15.1, 15.2 ist hier ein Ergänzungswinkel β von 80° vorgesehen. Dadurch ergibt sich eine drehsymmetrische Anordnung der Paare 16.1, 16.2 von Ausnehmungen 15.1, 15.2. Fig. 3 (c) zeigt den Knoterhaken 5 für den Garnknoter 1 in einer Seitenansicht, Fig. 3 (d) in einer Draufsicht von oben, und Fig. 3 (e) in einer perspektivischen Ansicht. Der Knoterhaken weist hier zwei feststehende Klemmflügel 18 auf. Zudem weist er einen schwenkbeweglichen Klemmflügel 19 auf. Die Klemmflügel 18, 19 weisen eine Erstreckungskomponente in eine selbe erste Raumrichtung 20 auf. Es ist auch eine nicht erfindungsgemäße Ausführungsform eines Knoterhakens 5 verwendbar, der nur einen feststehenden Klemmflügel 18 und den schwenkbeweglichen Klemmflügel 19 aufweist.

Die feststehenden Klemmflügel 18 erstrecken sich von einem Rumpf 66 des Knoterhakens 5 ausgehend zu einem freien Ende (nicht bezeichnet) hin. Der schwenkbewegliche Klemmflügel 19 ist hingegen in einem Schwenkflügellager 59, das im Rumpf 66 des Knoterhakens 5 vorgesehen ist, um eine Flügelschwenkachse 69 in und gegen eine Flügelschwenkrichtung 61 schwenkbar gelagert. Auch der schwenkbewegliche Klemmflügel 19 weist ein freies Ende 74 auf.

Der schwenkbewegliche Klemmflügel 19 weist eine Anformung 23 auf, die in Richtung zum feststehenden Klemmflügel 18 hin erhaben ist. Die Anformung erstreckt sich daher gegen die zweite Raumrichtung 21. Sie ist hier am freien Ende 74 des schwenkbeweglichen Klemmflügels 19 angeordnet. Prinzipiell kann sich der schwenkbewegliche Klemmflügel 19 aber auch über die Anformung 23 hinaus zu seinem freien Ende 74 hin erstrecken. Die Anformung 19 erstreckt sich dafür zudem in einem im Wesentlichen rechten Winkel δ zu einem Schwenkflügel 77 des schwenkbeweglichen Flügels 19, an dem sie angeordnet ist. Sie ist hakenförmig, hier dreieckförmig, ausgebildet.

Der schwenkbewegliche Klemmflügel 19 ist hier zu beiden feststehenden Klemmflügeln 18 jeweils wenigstens zum freien Ende der Klemmflügel 18, 19 hin in einer dritten Raumrichtung 22, die sich quer zur ersten Raumrichtung 20 und quer zur zweiten Raumrichtung 21 erstreckt, seitenversetzt angeordnet. Dabei sind die feststehenden Klemmflügel 18 spiegelsymmetrisch zu einer sich mittig durch den schwenkbeweglichen Klemmflügel 19 erstreckenden fiktiven Linie (nicht gezeigt) angeordnet. Die feststehenden Klemmflügel 18 weisen dabei dieselbe Länge LF auf. Zudem ist der schwenkbewegliche Klemmflügel 19 kürzer als die feststehenden Klemmflügel 19 vorgesehen.

Weiterhin sind die beiden feststehenden Klemmflügel 18 hier zumindest endseitig voneinander beabstandet, so dass zwischen ihnen ein Spalt 17 ausgebildet ist. Zudem ist der schwenkbewegliche Klemmflügel 19 in einer Draufsicht zumindest endseitig zwischen den beiden feststehenden Klemmflügeln 18 angeordnet. Dadurch ist die Anformung 23 jeweils seitlich der beiden feststehenden Klemmflügel 18 zwischen diesen positioniert. Der Spalt 17 erstreckt sich zwischen den feststehenden Klemmflügeln 18 und unterhalb des schwenkbeweglichen Klemmflügels 19 gegen die erste Raumrichtung 20 noch über die Anformung 23 hinaus. Dadurch ist nicht nur unterhalb sondern zudem gegen die erste Raumrichtung 20 gesehen hinter der Anformung 23 ein Freiraum vorgesehen, durch den ein mit dem Knoterhaken 5 fertiggestellter Knoten 3, insbesondere wenn auf ihn eine Zugkraft 73 gegen die zweite Raumrichtung 21 wirkt, in diese Richtung 21 herabfallen kann.

Der schwenkbewegliche Klemmflügel 19 ist hier daher zu den feststehenden Klemmflügeln 18 in eine zweiten Raumrichtung 21, die sich quer zur ersten Raumrichtung 20 erstreckt, nur bereichsweise höhenversetzt angeordnet. Dadurch greift die Anformung 23 in den Spalt 17 zwischen die feststehenden Klemmflügel 18 geringfügig ein.

Prinzipiell kann der Spalt 17 u- oder v- förmig ausgebildet sein. Es hat sich aber eine etwa schlüssellochartige Aufweitung 75 des Spaltes 17 als vorteilhaft erwiesen, wobei dadurch der Spalt 17 an einem dem Schwenkflügellager 59 zugewandten Ende aufgeweitet ist. Dadurch steht den Bindemittelsträngen 4.1, 4.2 mehr Raum zur Verfügung und der Knoten 3 kann sich leichter und schneller vom Knoterhaken 5 lösen.

Der schenkbewegliche Klemmflügel 19 kann durch Verschwenken in Flügelschwenkrichtung 61 von einem ungeöffneten Zustand in einen geöffneten Zustand verschwenkt werden. Im geöffneten Zustand ist das freies Ende 74 des schwenkbeweglichen Klemmflügels 19 weiter von den feststehenden Klemmflügeln 18 beabstandet als im ungeöffneten Zustand. Im geöffneten Zustand sind die Bindemittelstränge 4.1, 4.2 zwischen die feststehenden und den schwenkbeweglichen Klemmflügel 18, 19 einlegbar. Die Anformung 23 ist dafür vorgesehen, die zwischen die feststehenden und den schwenkbeweglichen Klemmflügel 18, 19 eingelegten Bindemittelstränge 4.1, 4.2 durch eine aus den Bindemittelsträngen 4.1, 4.2 gebildete Bindemittelschlaufe, die um den Rumpf 66 des Knoterhakens 5 geschlungen ist, zu ziehen. Dafür wird der schwenkbewegliche Klemmflügel 19 geschlossen und die Bindemittelstränge 4.1, 4.2 zwischen den feststehenden und dem schwenkbeweglichen Klemmflügel 18, 19 verklemmt.

Um das Verschwenken des schwenkbeweglichen Klemmflügels 19 zu bewerkstelligen, ist an einem dem freien Ende 74 des schwenkbeweglichen Klemmflügels 19 gegenüberliegenden Ende eine Steuerrolle 46 vorgesehen. Die Steuerrolle 46 ist an einer dem freien Ende abgewandten Seite (nicht bezeichnet) des Schwenkflügellagers 59 angeordnet. Daher wird der schwenkbewegliche Klemmflügel 19 bei einem Verstellen der Steuerrolle 46 vom ungeöffneten in den geöffneten Zustand oder zurück verschwenkt.

Im Garnknoter 1 wird die Steuerrolle 46 entlang einer Steuerkulisse 63 (s. Fig. 3 (a)) geführt, die ortsfest am Knoterrahmen 6 angeordnet ist. Die Steuerkulisse 46 ermöglicht für jeden der Knoten 3 jeweils ein einmaliges Öffnen vom ungeöffneten in den geöffneten Zustand und Schließen vom geöffneten in den ungeöffneten Zustand des schwenkbeweglichen Klemmflügels 19.

Die Stabilität des Knoterhakens 5 wird erhöht, indem der Rumpf 66 sich unterhalb des schenkbeweglichen Klemmflügels 19 erstreckt. Eine Länge LS des Spaltes 17 oder eine Länge LK der feststehenden Klemmflügel 18 verhält sich zu einer Länge LR des Rumpfes 66 in einem Haltebereich 68 des Knoterhakens 5, der zum Verklemmen von Bindemittelsträngen 4.1, 4.2 zwischen den feststehenden Klemmflügeln 18 und dem schwenkbeweglichen Klemmflügel 19 vorgesehen ist, bevorzugt wenigstens im Verhältnis 1:1 oder größer, vorzugsweise 2:1 oder 3:1 oder noch größer. Der sich unterhalb des schwenkbeweglichen Klemmflügels 19 erstreckende Rumpf 66 ist daher im Verhältnis zum Spalt 17 beziehungsweise den Klemmflügeln 18, 19 nur sehr kurz ausgebildet. Vorzugsweise dient der Rumpf 66 dort lediglich der Stabilisierung des Knoterhakens 5. Je kürzer der Rumpf 66 sich unterhalb des schwenkbeweglichen Klemmflügels 19 erstreckt, umso größer ist der Spalt 17 und umso leichter können Knoten 3, insbesondere aus verhältnismäßig dickem Bindematerial, am Ende des Knotenvorgangs vom Knoterhaken 5 gezogen werden.

Der sich im Haltebereich 68 unterhalb des schenkbeweglichen Klemmflügels 19 erstreckende Rumpf 66 weist zudem hier eine Vertiefung 70 auf, die den zwischen dem schwenkbeweglichen Klemmflügel 19 und den feststehenden Klemmflügeln 18 verklemmten Bindemittelsträngen 4.1, 4.2 Raum gibt. Um die Bindemittelstränge 4.1, 4.2 nicht aufzureiben, kann die Vertiefung 70 abgerundet sein.

Um das Ziehen des Knotens 3 vom Knoterhaken 5 noch weiter zu erleichtern, ist es weiterhin bevorzugt, dass sich eine Stirnwand 71 des Spaltes 17 im Wesentlichen in die zweite Raumrichtung 21 erstreckt, so dass ein fertig gestellter Knoten 3 nicht an der Stirnwand 71 oder einer Kante (nicht bezeichnet) der Stirnwand 71 hängen bleibt, oder sich aufreibt.

Der schwenkbewegliche Klemmflügel 19 ist insgesamt schmaler als der Spalt 17 ausgebildet. Diese Ausführungsform ist beim Durchziehen der Bindemittelstränge 4.1, 4.2 durch die Bindemittelschlaufe sowie beim Abstreifen des Knotens 3 vom Knoterhaken 5 vorteilhaft.

Um den Knoterhaken 5 im Garnknoter 1 drehbar zu befestigen, weist dieser einen Schaft 24 für eine Lagerung im Garnknoter 1 auf. Der Schaft 24 ist gegenüber den feststehenden Klemmflügeln 18 in einem Winkel γ angeordnet. Da die Bindemittelschlaufe für den Knoten 3 eine volle Umdrehung des Knoterhakens 5 um die Knoterhakenachse 44 erfordert, wird im Garnknoter 1 für den Knoterhaken 5 ein Freiraum (nicht bezeichnet) benötigt, der einer Länge (nicht bezeichnet) der feststehenden Klemmflügel 18 entspricht. Die winkelige Anordnung der Klemmflügel 18 zum Schaft 24 ist daher platzsparend.

Der dafür erforderliche Knick 72 im Rumpf 66 ist abgerundet ausgebildet, so dass der Rumpf 66 im Knick 72 keine Kanten aufweist und die Bindemittelstränge 4.1, 4.2 sich nicht am Knick 72 aufreiben können.

Das Bilden der Bindemittelschlaufe um den Rumpf 66 des Knoterhakens 5 wird durch eine rampenförmige Verbreiterung 67 des Rumpfes 66 unterhalb des Schaftes 24 erleichtert, durch die sich die Bindemittelschlaufe beim Drehen des Knoterhakens 5 unterhalb der Steuerrolle 46 um den Rumpf 66 wickelt.

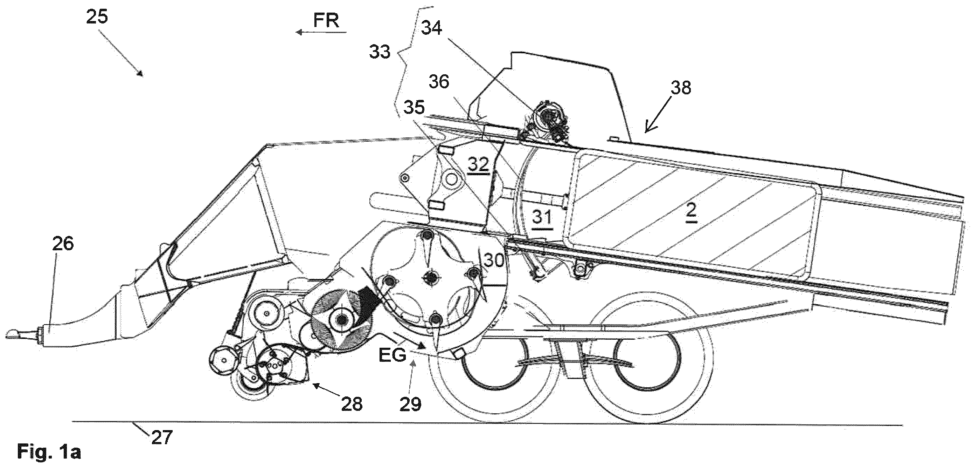

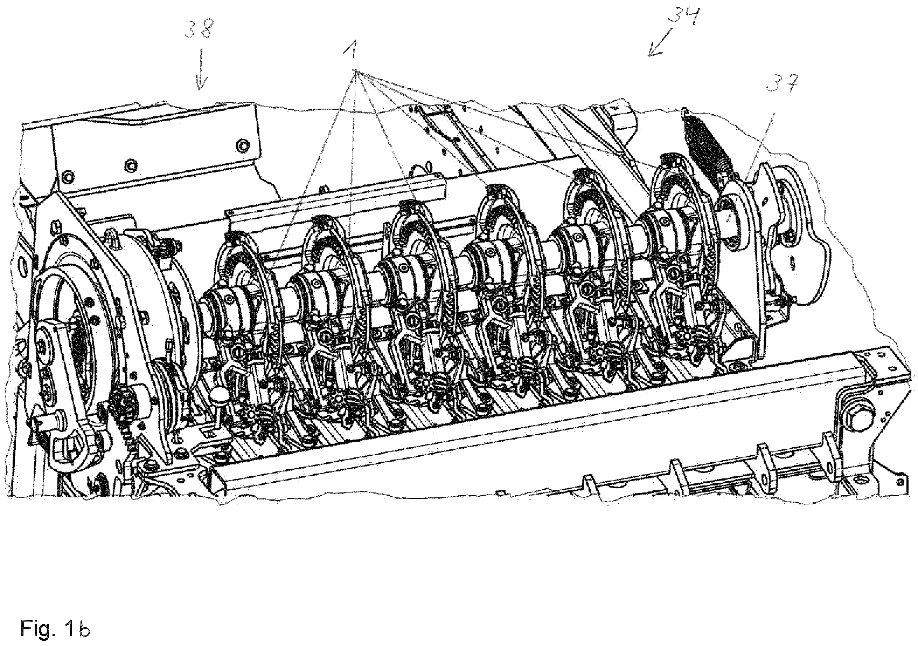

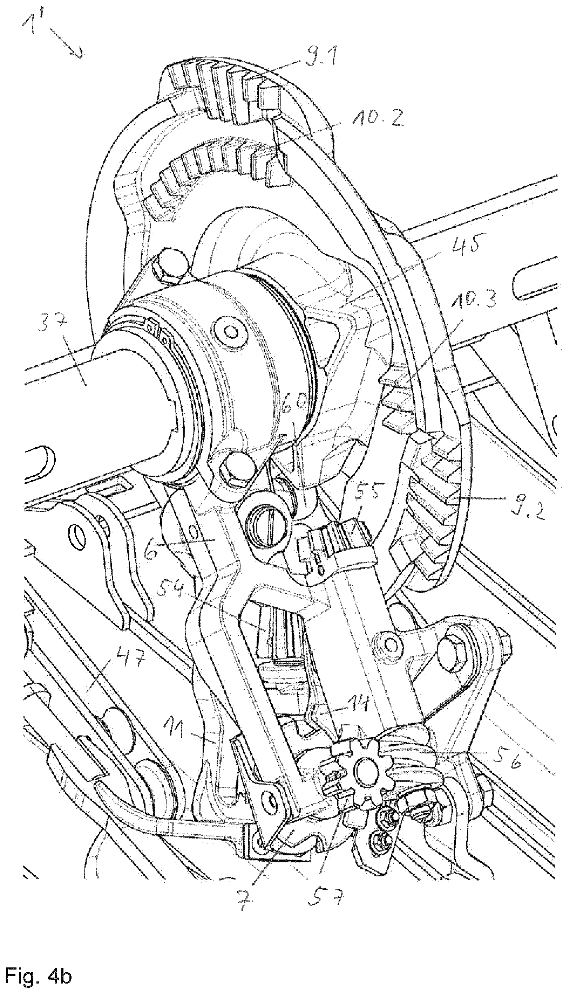

Fig. 4 zeigt in (a) eine weitere perspektivische Ansicht des Garnknoters 1 der Fig. 2, und in (b) eine perspektivische Ansicht einer weiteren Ausführungsform eines Garnknoters 1' für die Knoteranordnung 34 der Fig. 1 (b).

Der Bindevorgang des Garnknoters 1 der Fig. 4 (a) umfasst zum Herstellen der beiden Knoten 3 folgende Schritte:
a. Einlegen der Bindemittelstränge 4.1, 4.2 in die erste Ausnehmung 15.1 des ersten Paares 16.1 von Ausnehmungen 15.1, 15.2 an der Garnhaltescheibe 7 im Aufwärtsgang der Unternadel 36;
b. Drehung der Garnhaltescheibe 7 und dabei Verklemmen der Bindemittelstränge 4.1, 4.2;
c. Während der Drehung der Garnhaltescheibe 7 Drehung des Knoterhakens 5, wobei der schwenkbewegliche Klemmflügel 19 einmal vom ungeöffneten in den geöffneten Zustand und zurück verschwenkt wird, um die Bindemittelstränge 4.1, 4.2 zwischen die feststehenden und den schwenkbeweglichen Klemmflügel 18, 19 zu legen;
d. Während der Drehung der Garnhaltescheibe 7 Einlegen der Bindemittelstränge 4.1, 4.2 in die zweite Ausnehmung 15.2 der beiden Ausnehmungen 15.1, 15.2 des Paares 16.1 beim Abwärtsgang der Unternadel 36;
e. Beim Weiterdrehen der Garnhaltescheibe 7 Passieren der Messerklinge 12, wobei die Bindemittelstränge 4.1, 4.2 durch die Messerklinge 12 durchtrennt werden;
f. Verschwenken des Abstreifhebels 11 zum Abstreifen des ersten Knotens 3 vom Knoterhaken 5;
g. Anhalten der Garnhaltescheibe 7, wenn die Bindemittelstränge 4.1, 4.2 vor der Schneidkante der Messerklinge 12 angekommen sind;
h. Drehung des Knoterhakens 5 analog zu (c);
i. Verschwenken des Abstreifhebels 11 zum Ausziehen der Enden 4.3 der Bindemittelstränge 4.1, 4.2 mit dem Auszieher 13 des Abstreifhebels 11 aus der Halteanordnung und zum Abstreifen des zweiten Knotens 3 vom Knoterhaken 5;
j. Herausziehen des Knotens 3 aus dem Garnknoter 1 bei Zug auf den Knoten 3 gegen die zweite Richtung 21, insbesondere hervorgerufen durch Vorschub des Erntegutballens 2.

Das Verfahren zur Bildung der zwei aufeinander folgenden Knoten 3 umfasst daher die wesentlichen Merkmale, dass zwischen dem ersten und dem zweiten Knoten 3 die Bindemittelstränge 4.1, 4.2 durchtrennt werden, und dass die Garnhaltescheibe 7 angehalten wird, bevor die Bindemittelstränge 4.1, 4.2 bei der Herstellung des zweiten Knotens 3 die Messerklinge 12 passieren.

Die Ausführungsform des Garnknoters 1' der Fig. 4 (b) weist nicht nur ein einziges zweites Antriebsmittel 10.1 zum Antrieb der Garnhaltescheibe 7 auf, sondern zwei zweite Antriebsmittel 10.1, 10.2. Auch das zweite der beiden zweiten Antriebsmittel 10.1, 10.2 ist als ein Zahnsegment ausgeführt.

Bei der hier vorgesehenen Garnhaltescheibe 7 dreht sich der Garnknoter 1' analog zur Ausführungsform der Fig. 4 (a) pro Knotenpaar 3 um 180°. Durch das erste der beiden zweiten Antriebsmittel 10.1 wird bei dieser Ausführungsform des Garnknoters 1' jedoch ein Drehwinkel der Garnhaltescheibe 7 während der Bildung des ersten Knotens 3 von 135° durchlaufen. Dabei führt die Garnhaltescheibe 7 die Bindemittelstränge 4.1, 4.2 entlang der Messerklinge 12, so dass sie durchtrennt werden. Während der Herstellung des zweiten Knotens 3 dreht sich die Garnhaltescheibe 7 um den noch fehlenden Drehwinkel von 45°. Dafür ist das zweite der beiden zweiten Antriebsmittel 10.2 vorgesehen. Die Bindemittelstränge 4.1, 4.2 werden anschließend von der Halteanordnung oberhalb einer Schneidkante der Messerklinge 12 gehalten und nicht geschnitten.

Daher umfasst das Verfahren zur Bildung der zwei aufeinander folgenden Knoten 3 auch bei dieser Ausführungsform des Garnknoters 1' die wesentlichen Merkmale, dass zwischen dem ersten und dem zweiten Knoten 3 die Bindemittelstränge 4.1, 4.2 durchtrennt werden, und dass die Garnhaltescheibe 7 angehalten wird, bevor die Bindemittelstränge 4.1, 4.2 bei der Herstellung des zweiten Knotens 3 die Messerklinge 12 passieren.

Bei der Ausführungsform der Fig. 4 (b) entspricht die Länge der Bindemittelstränge 4.1, 4.2, die zwischen der Herstellung des ersten Knotens 3 und der Herstellung des zweiten Knotens 3 von der Halteanordnung rückseitig der Garnhaltescheibe 7 gehalten wird, dem Drehwinkel, den die Garnhaltescheibe 7 bei Antrieb durch das erste der beiden zweiten Antriebsmittel 10.1 durchläuft, bevor die Bindemittelstränge 4.1, 4.2 geschnitten werden. Dieser Drehwinkel beträgt hier 135°. Demgegenüber durchläuft die Garnhaltescheibe 7 bei der Ausführungsform des Garnknoters 1 der Fig. 4 (a) lediglich einen Drehwinkel von 100°, bevor die Bindemittelstränge 4.1, 4.2 geschnitten werden. Die in der Halteanordnung zur Bildung des zweiten Knotens 3 gehaltenen Enden 4.3 der Bindemittelstränge 4.1, 4.2 sind bei der Ausführungsform des Garnknoters 1' der Fig. 4 (b) daher länger als die bei der Ausführungsform des Garnknoters 1 der Fig. 4 (a). Um Bindematerial einzusparen, hat sich die Ausführungsform der Fig. 4 (a) gegenüber der der Fig. 4 (b) daher als vorteilhaft erwiesen.

Gegenüber dem oben beschriebenen Bindevorgang des Garnknoters 1 der Fig. 4 (a) umfasst das Herstellen der beiden Knoten 3 beim Garnknoter 1' der Fig. 4 (b) daher die Schritte:
a. Einlegen der Bindemittelstränge 4.1, 4.2 in die erste Ausnehmung 15.1 des ersten Paares 16.1 von Ausnehmungen 15.1, 15.2 an der Garnhaltescheibe 7 im Aufwärtsgang der Unternadel 36;
b. Drehung der Garnhaltescheibe 7 und Verklemmen der Bindemittelstränge 4.1, 4.2;
c. Während der Drehung der Garnhaltescheibe 7 Drehung des Knoterhakens 5, wobei der schwenkbewegliche Klemmflügel 19 einmal vom ungeöffneten in den geöffneten Zustand und zurück verschwenkt wird, um die Bindemittelstränge 4.1, 4.2 zwischen die feststehenden und den schwenkbeweglichen Klemmflügel 18, 19 zu legen;
d. Weiterdrehen der Garnhaltescheibe 7, wobei die Bindemittelstränge 4.1, 4.2 die Messerklinge 12 passieren und dabei durchtrennt werden;
e. Verschwenken des Abstreifhebels 11 zum Abstreifen des ersten Knotens 3 vom Knoterhaken 5;
f. Anhalten der Garnhaltescheibe 7;
g. Einlegen der Bindemittelstränge 4.1, 4.2 in die zweite Ausnehmung 15.2 der beiden Ausnehmungen 15.1, 15.2 des Paares 16.1 beim Abwärtsgang der Unternadel 36;
h. Weiterdrehen der Garnhaltescheibe 7;
i. Drehung des Knoterhakens 5 analog zu (c);
j. Ausziehen der Enden der Bindemittelstränge 4.3 mit dem Auszieher 13 des Abstreifhebels 11 aus der Halteanordnung und Abstreifen des zweiten Knotens 3 vom Knoterhaken 5;
k. Herausziehen des Knotens 3 aus dem Garnknoter 1' bei Zug auf den Knoten 3 gegen die zweite Richtung 21, insbesondere hervorgerufen durch Vorschub des Erntegutballens 2.

## Patentansprüche

1. Knoterhaken (5) für einen Garnknoter zum Herstellen eines Schlaufenknotens, mit wenigstens einem feststehenden Klemmflügel (18) und einem schwenkbeweglich gelagerten Klemmflügel (19), die eine Erstreckungskomponente in eine selbe erste Raumrichtung (20) aufweisen, wobei der schwenkbewegliche Klemmflügel (19) eine in Richtung zum feststehenden Klemmflügel (18) hin erhabene Anformung (23) aufweist, wobei der schwenkbewegliche Klemmflügel (19) reversibel von einem ungeöffneten in einen geöffneten Zustand verschwenkbar ist, so dass ein freies Ende (74) des schwenkbeweglichen Klemmflügels (19) im geöffneten Zustand weiter vom feststehenden Klemmflügel (18) beabstandet ist als im ungeöffneten Zustand, wobei zum Verschwenken des schwenkbeweglichen Klemmflügels (19) an einem dem freien Ende (74) des schwenkbeweglichen Klemmflügels (19) gegenüberliegenden Ende eine Steuerrolle (46) vorgesehen ist, wobei er einen weiteren feststehenden Klemmflügel (18) aufweist, wobei zwischen den feststehenden Klemmflügeln (18) ein Spalt (17) ausgebildet ist, und wobei der schwenkbewegliche Klemmflügel (19) sich in und/oder oberhalb des Spaltes (17) zwischen den feststehenden Klemmflügeln (18) erstreckt, und wobei sich der Spalt (17) im ungeöffneten Zustand gegen die erste Raumrichtung (20) über die Anformung (23) hinaus erstreckt, wobei sich die feststehenden Klemmflügel (18) von einem Rumpf (66) des Knoterhakens (5) ausgehend zu einem freien Ende hin erstrecken, **dadurch gekennzeichnet, dass** die beiden feststehenden Klemmflügel (18) zumindest endseitig voneinander beabstandet sind, so dass der Spalt (17) zwischen ihnen ausgebildet ist, sodass ein einfaches Abstreifen des fertiggestellten Knotens durch den Spalt (17) nach unten möglich ist.

2. Knoterhaken (5) nach Anspruch 1, **dadurch gekennzeichnet, dass** , sich der Spalt (17) wenigstens entlang etwa einem Viertel einer Länge (LF) des wenigstens einen feststehenden Klemmflügels (18) oder noch weiter, insbesondere etwa entlang einem Drittel der Länge (LF) des wenigstens einen feststehenden Klemmflügels (18) oder noch weiter, gegen die erste Raumrichtung (20) hinter die Anformung (23) erstreckt.

3. Knoterhaken (5) nach einem der Ansprüche 1 oder 2, **dadurch gekennzeichnet, dass** der schwenkbewegliche Klemmflügel (19) in einer Draufsicht zumindest an seinem Ende (74) zwischen den beiden feststehenden Klemmflügeln (18) angeordnet ist, oder dass die feststehenden Klemmflügel (18) spiegelsymmetrisch zu einer sich mittig durch den schwenkbeweglichen Klemmflügel (19) erstreckenden fiktiven Linie angeordnet sind.

4. Knoterhaken (5) nach einem der Ansprüche 1 - 3, **dadurch gekennzeichnet, dass** die feststehenden Klemmflügel (18) gleich lang ausgebildet sind, und/oder dass der schwenkbewegliche Klemmflügel (19) kürzer als die beiden feststehenden Klemmflügel (18) ist.

5. Knoterhaken (5) nach einem der vorherigen Ansprüche, **dadurch gekennzeichnet, dass** die Anformung (23) an dem freien Ende (74) des schwenkbeweglichen Klemmflügels (19) angeordnet ist.

6. Knoterhaken (5) nach einem der vorherigen Ansprüche, **dadurch gekennzeichnet, dass** sich die Anformung (23) in einem rechten Winkel (δ) zum schwenkbeweglichen Flügel (19) erstreckt.

7. Knoterhaken (5) nach einem der Ansprüche 1 - 6, **dadurch gekennzeichnet, dass** der schwenkbewegliche Klemmflügel (19) zumindest bereichsweise schmaler als der Spalt (17) ausgebildet ist.

8. Knoterhaken (5) nach einem der Ansprüche 1 - 7, **dadurch gekennzeichnet, dass** der Knoterhaken (5) einen Schaft (24) für eine Lagerung im Garnknoter (1) aufweist, wobei der Schaft (24) und die feststehenden Klemmflügel (18) in einem Winkel (γ) zueinander, insbesondere etwa L- förmig zueinander, angeordnet sind.

9. Knoterhaken (5) nach einem der Ansprüche 1 - 8, **dadurch gekennzeichnet, dass** der Spalt (23) u- oder v- förmig ausgebildet ist, oder dass er schaftseitig eine Aufweitung (75) aufweist, insbesondere so dass er etwa schlüssellochförmig ausgebildet ist.

10. Knoterhaken (5) nach Anspruch 11, **dadurch gekennzeichnet, dass** die Anformung (23) im ungeöffneten Zustand in die Aufweitung (75) eintaucht.

11. Knoterhaken (5) nach einem der Ansprüche 1 - 10, **dadurch gekennzeichnet, dass** eine Länge (LS) des Spaltes (17) oder eine Länge (LF) des wenigstens einen feststehenden Klemmflügels (18) sich zu einer Länge (LR) des Rumpfes (66) in einem Haltebereich (68), der zum Verklemmen von Bindemittelsträngen (4.1, 4.2) zwischen dem wenigstens einen feststehenden Klemmflügel (18) und dem schwenkbeweglichen Klemmflügel (19) vorgesehen ist, sich im Verhältnis 1:1 oder größer, insbesondere 2:1 oder noch größer, verhält.

12. Garnknoter (1) mit einem Knoterhaken (5) nach einem der vorherigen Ansprüche.

13. Ballenpresse (25) mit einem Garnknoter (1) nach Anspruch 12.

## Claims

1. Knotting hook (5) for a twine knotter for producing a loop knot, having at least one fixed clamping wing (18) and a pivotably mounted clamping wing (19), which have an extension component in the same first spatial direction (20), the pivotable clamping wing (19) having a molding (23) that is raised toward the fixed clamping wing (18), the pivotable clamping wing (19) being reversibly pivotable from an unopened to an opened state, so that a free end (74) of the pivotable clamping wing (19) is further spaced from the fixed clamping wing (18) in the opened state than in the unopened state, a control roller (46) being provided at an end opposite the free end (74) of the pivotable clamping wing (19) for pivoting the pivotable clamping wing (19), the knotting hook having a further fixed clamping wing (18), a gap (17) being formed between the fixed clamping wings (18), and the pivotable clamping wing (19) extending in and/or above the gap (17) between the fixed clamping wings (18), and the gap (17) in the unopened state extending beyond the molding (23) in the first spatial direction (20), the fixed clamping wings (18) extending from a body (66) of the knotting hook (5) to a free end, **characterized in that** the two fixed clamping wings (18) are spaced apart from each other at least at the ends, so that the gap (17) is formed between them, so that a simple removal of the finished knot through the gap (17) downward is possible.

2. Knotting hook (5) according to claim 1, **characterized in that** the gap (17) extends at least along approximately a quarter of a length (LF) of the at least one fixed clamping wing (18) or even further, in particular approximately along a third of the length (LF) of the at least one fixed clamping wing (18) or even further, counter to the first spatial direction (20) behind the molding (23).

3. Knotting hook (5) according to either of claims 1 or 2, **characterized in that** the pivotable clamping wing (19) is arranged in a plan view at least at its end (74) between the two fixed clamping wings (18), **or in that** the fixed clamping wings (18) are arranged mirror-symmetrically to a fictitious line extending centrally through the pivotable clamping wing (19).

4. Knotting hook (5) according to any of claims 1 - 3, **characterized in that** the fixed clamping wings (18) are of equal length, **and/or in that** the pivotable clamping wing (19) is shorter than the two fixed clamping wings (18).

5. Knotting hook (5) according to any of the preceding claims, **characterized in that** the molding (23) is arranged at the free end (74) of the pivotable clamping wing (19).

6. Knotting hook (5) according to any of the preceding claims, **characterized in that** the molding (23) extends at a right angle (δ) to the pivotable wing (19).

7. Knotting hook (5) according to any of claims 1 - 6, **characterized in that** the pivotable clamping wing (19) is narrower at least in portions than the gap (17).

8. Knotting hook (5) according to any of claims 1 - 7, **characterized in that** the knotting hook (5) has a shaft (24) for mounting in the twine knotter (1), the shaft (24) and the fixed clamping wings (18) being arranged at an angle (γ) to one another, in particular approximately L-shaped to one another.

9. Knotting hook (5) according to any of claims 1 - 8, **characterized in that** the gap (23) is U-shaped or V-shaped, **or in that** it has a widening (75) on the shaft side, in particular so that it is approximately keyhole-shaped.

10. Knotting hook (5) according to claim 11, **characterized in that** the molding (23) dips into the widening (75) in the unopened state.

11. Knotting hook (5) according to any of claims 1 - 10, **characterized in that** a length (LS) of the gap (17) or a length (LF) of the at least one fixed clamping wing (18) is in a ratio of 1:1 or greater, in particular 2:1 or even greater, to a length (LR) of the body (66) in a holding area (68) which is provided for clamping binding agent strands (4.1, 4.2) between the at least one fixed clamping wing (18) and the pivotable clamping wing (19).

12. Twine knotter (1) having a knotting hook (5) according to any of the preceding claims.

13. Baling press (25) having a twine knotter (1) according to claim 12.

## Revendications

1. Bec (5) de noueur de fil pour la fabrication d'un nœud coulant, comprenant au moins une aile (18) de serrage fixe et une aile (19) de serrage montée mobile en pivotement, qui ont une composante d'étendue dans une seule et même direction (20) de l'espace, dans lequel l'aile (19) de serrage mobile en pivotement a une conformation (23) en saillie dans la direction allant vers l'aile (18) de serrage fixe, dans lequel l'aile (19) de serrage mobile en pivotement peut pivoter de manière réversible d'une position non ouverte en une position ouverte de manière à ce qu'une extrémité (74) libre de l'aile (19) de serrage mobile en pivotement soit plus à distance de l'aile (18) de serrage fixe dans l'état ouvert que dans l'état non ouvert, dans lequel il est prévu pour le pivotement de l'aile (19) de serrage mobile en pivotement un rouleau (46) de commande à une extrémité opposée à l'extrémité (74) libre de l'aile (19) de serrage mobile en pivotement, dans lequel il a une autre aile (18) de serrage fixe, dans lequel entre les ailes (18) de serrage fixes est constitué un intervalle (17) et dans lequel l'aile (19) de serrage mobile en pivotement s'étend dans et/ou au-dessus de l'intervalle (17) entre les ailes (18) de serrage fixes, et dans lequel l'intervalle (17) s'étend dans l'état non ouvert dans la première direction (20) de l'espace au-delà de la conformation (23), dans lequel les ailes (18) de serrage fixes s'étendent à partir d'un tronc (66) du bec (5) de noueur en allant vers une extrémité libre, **caractérisé en ce que** les deux ailes (18) de serrage fixes sont, au moins du côté de l'extrémité, à distance l'une de l'autre, de manière à constituer entre elles l'intervalle (17), de sorte qu'il est possible simplement de dénouer vers le bas par l'intervalle (17) le nœud fini.

2. Bec (5) de noueur suivant la revendication 1, **caractérisé en ce que** l'intervalle (17) s'étend derrière la conformation (23) dans la première direction (20) de l'espace au moins suivant à peu près un quart d'une longueur (LF) de la au moins une aile (18) de serrage fixe ou encore d'avantage, en particulier à peu près suivant un tiers de la longueur (LF) du de la au moins une aile (18) de serrage fixe ou encore d'avantage.

3. Bec (5) de noueur suivant l'une des revendications 1 ou 2, **caractérisé en ce que** l'aile (19) de serrage mobile en pivotement est disposée en vue en plan au moins à son extrémité (74) entre les deux ailes (18) de serrage fixes ou **en ce que** les ailes (18) de serrage fixes sont disposées symétriquement comme en un miroir par rapport à une ligne fictive s'étendant au milieu de l'aile (19) de serrage mobile en pivotement.

4. Bec (5) de noueur suivant l'une des revendications 1 à 3, **caractérisé en ce que** les ailes (18) de serrage fixes ont la même longueur et/ou **en ce que** l'aile (19) de serrage mobile en pivotement est plus courte que les deux ailes (18) de serrage fixes.

5. Bec (5) de noueur suivant l'une des revendications précédentes, **caractérisé en ce que** la conformation (23) est disposée à l'extrémité (74) libre de l'aile (19) de serrage mobile en pivotement.

6. Bec (5) de noueur suivant l'une des revendications précédentes, **caractérisé en ce que** la conformation (23) s'étend à angle droit (δ) par rapport à l'aile (19) mobile en pivotement.

7. Bec (5) de noueur suivant l'une des revendications 1 à 6, **caractérisé en ce que** l'aile (19) de serrage mobile en pivotement est au moins par endroit plus étroite que l'intervalle (17).

8. Bec (5) de noueur suivant l'une des revendications 1 à 7, **caractérisé en ce que** le bec (5) de nouage a un fût (24) pour un montage dans le noueur (1) de fil, dans lequel le fût (24) et les ailes (18) de serrage fixes font entre eux un angle (γ), en particulier à peu près en forme de L l'un par rapport aux autres.

9. Bec (5) de noueur suivant l'une des revendications 1 à 8, **caractérisé en ce qu'**intervalle (23) est en forme de u ou en forme de v, ou **en ce qu'**il a du côté du fût un élargissement (75), en particulier de manière à ce qu'il soit constitué à peu près en forme de trou de serrure.

10. Bec (5) de noueur suivant la revendication 11, **caractérisé en ce que** ce que la conformation (23) plonge dans l'état non ouvert dans l'élargissement (75).

11. Bec (5) de noueur suivant l'une des revendications 1 à 10, **caractérisé en ce qu'**une longueur (LS) de l'intervalle (17) ou une longueur (LF) de la au moins une aile (18) de serrage fixe est, par rapport à une longueur (LR) du tronc (66) dans une partie (68) de maintien, qui est prévue pour le serrage de cordons (4.1, 4.2) d'agent de liage en la au moins une aile (18) de serrage fixe et l'aile (19) de serrage mobile en pivotement, dans le rapport de 1:1 ou plus en particulier de 2:1 ou encore plus.

12. Noueur (1) de fil ayant un bec (5) de noueur suivant l'une des revendications précédentes.

13. Presse (25) à balles ayant un noueur (1) de fil suivant la revendication 12.
